# EUROPÄISCHE PATENTSCHRIFT

(11) **EP 1 607 220 B1**
(45) Veröffentlichungstag und Bekanntmachung des Hinweises auf die Patenterteilung: **19.09.2007**
(21) Anmeldenummer: 05107088.6
(22) Anmeldetag: 15.03.2005
(51) Int. Cl.: B41F 33/00, G01N 21/88, G01J 3/10

(54) **Druckmaschine mit einem Inline-Inspektionssystem**
Printing machine with an online inspection system
Machine d'impression avec un système d'inspection en ligne

(30) Priorität: 23.03.2004 DE 102004014533; 23.03.2004 DE 102004014548; 23.07.2004 DE 102004035786
(43) Veröffentlichungstag der Anmeldung: 21.12.2005
(62) Teilanmeldung aus: 05102011.3
(73) Patentinhaber: Koenig & Bauer Aktiengesellschaft, 97080 Würzburg (DE)
(72) Erfinder: Stöber, Bernd, 33378, Rheda-Wiedenbrück (DE)
(74) Vertreter: Stiel, Jürgen

(56) Entgegenhaltungen:
- WO-A-20/04022342
- DE-A1- 4 321 177
- US-A- 5 783 909
- US-A- 6 050 192
- US-A1- 2002 179 816
- US-B1- 6 373 966

## Beschreibung

Die Erfindung betrifft eine Druckmaschine mit einem Inline-Inspektionssystem gemäß dem Oberbegriff des Anspruchs 1.

Die Anwendung besteht vorrangig in der Beurteilung einer Qualität einer von einer Druckmaschine produzierten Drucksache, wobei die Druckmaschine vorzugsweise als eine Rotationsdruckmaschine, insbesondere als eine in einem Offsetdruckverfahren, in einem Stahlstichverfahren, in einem Siebdruckverfahren oder in einem Heißprägeverfahren druckende Druckmaschine ausgebildet ist.

Durch die US 6373966 ist eine Inline-Inspektionssystem bekannt, wobei eine Steuereinrichtung eine Spannung der Lichtquelle anhand des Messsignals eines Lichtsensors anpasst.

Durch die DE 41 02 122 A1 ist ein zur Anwendung in der Druckindustrie geeignetes Verfahren zur Untersuchung von bahnförmigem, durchscheinendem Material, insbesondere einer Papierbahn, bekannt, bei dem z. B. mit Leuchtdioden oder Laserdioden verwirklichte Blitzlichtlampen durch eine Papierbahn strahlen, bei dem durch die Papierbahn strahlendes Licht zur Erzeugung eines Videosignals auf eine CCD-Matrix einer Kamera fällt.

Durch die DE 43 21 177 A1 ist eine Druckmaschine mit einer Inline-Bildinspektionseinrichtung zur Inspektion eines in der Druckmaschine erstellten Druckproduktes bekannt, wobei eine Bilddaten vom Druckprodukt an eine Recheneinrichtung liefernde Bilderfassungseinrichtung vorgesehen ist, wobei die Bilderfassungseinrichtung aus einem Messmodul oder mehreren jeweils einen definierten Bildbereich des Druckproduktes abtastenden Messmodulen und aus zumindest einer zugeordneten, die Bilddaten in elektrischer Form bereitstellenden und vorzugsweise von den Messmodulen räumlich getrennten Empfangseinrichtung besteht, wobei die Messmodule und die mindestens eine Empfangseinrichtung mittels mindestens eines Bildleiters miteinander verbunden sind, wobei der Bilderfassungseinrichtung eine aus Präzisionshalogenlampen bestehende Beleuchtungseinrichtung zugeordnet ist, wobei ein Blasluftrohr mit Öffnungen in Richtung des Druckproduktes bei seiner Blasluftbeaufschlagung das Druckprodukt in einem definierten Abstand zur Beleuchtungseinrichtung hält und gleichzeitig mit der Blasluft die Beleuchtungseinrichtung kühlt. Eine Lampenregelung der Beleuchtungseinrichtung stellt durch eine Normierung des von der Beleuchtungseinrichtung emittierten Lichts anhand einer Normlichtquelle sicher, dass die Beleuchtungseinrichtung im gesamten relevanten Spektralbereich Strahlung gleicher Intensität aussendet.

Durch die DE 100 61 070 A1 ist eine Beleuchtungseinrichtung für eine optische Inspektionseinrichtung zur Untersuchung von Oberflächen bekannt, wobei mehrere vorzugsweise gleich lange, elektrisch miteinander verschaltete Trägerplatinen mit jeweils mehreren Reihen von Leuchtdioden linienartig in einem gemeinsamen, entsprechend der mit einer konstanten Lichtabstrahlung abzutastenden Objektfläche längbaren, steifen Montageprofil eingeschoben sind, wobei zwischen den Trägerplatinen und dem Montageprofil über eine mechanische Verbindung eine Wärmekopplung zur Kühlung der Leuchtdioden und ihrer Ansteuerelektronik erfolgt. Ein Hinweis auf einen Einsatz dieser Beleuchtungseinrichtung in einer Druckmaschine während einer Inspektion eines durch die Druckmaschine transportierten Bedruckstoffes ist nicht gegeben.

Durch die DE 202 13 431 U1 ist eine Einrichtung zur Qualitätskontrolle an Drucksachen bekannt, die gleichfalls ein in einer Druckmaschine angeordnetes Inline-Bildinspektionssystem bildet, wobei eine als eine Leuchtstoffröhre ausgebildete Beleuchtungseinrichtung und eine als eine Zeilenkamera ausgebildete Bildaufnahmeeinrichtung zum Einsatz gebracht werden. Maßnahmen für eine konstante Lichtabstrahlung sind nicht beschrieben.

Durch die DE 203 03 574 U1 ist ein Inline-Bildinspektionssystem für eine Druckmaschine, insbesondere einer Bogenoffsetdruckmaschine, bekannt, wobei eine als eine Leuchtstofflampe ausgebildete Beleuchtungseinrichtung unterhalb eines Fußtrittes nahe an einem einen Bedruckstoff führenden Gegendruckzylinder und eine als eine Zeilenkamera ausgebildete Bildaufnahmeeinrichtung in einem im Vergleich zur Beleuchtungseinrichtung weiteren Abstand vom Gegendruckzylinder in einer Zuordnung zum letzten Druckwerk der Druckmaschine angeordnet ist. Es findet sich jedoch kein Hinweis auf Maßnahmen für eine konstante Lichtabstrahlung durch die Beleuchtungseinrichtung.

Durch die EP 0 762 174 A2 ist eine Vorrichtung zur linienförmigen Beleuchtung von Blattgut, wie z. B. Banknoten oder Wertpapieren, bekannt, wobei ein zylindrischer Spiegel mit zwei Spiegelsegmenten vorgesehen ist, wobei die Spiegelsegmente eine elliptische, zwei Fokuslinien aufweisende Grundfläche ausbilden, wobei die Breite der Spiegelsegmente größer oder gleich der Breite des Blattguts gewählt ist, wobei in der ersten Fokuslinie das von einer Transportvorrichtung senkrecht zu dieser Fokuslinie transportierte Blattgut und in der zweiten Fokuslinie eine Kaltlichtquelle, z. B. eine Reihe von Leuchtdioden (LED's), angeordnet ist, wobei ein Detektor, z. B. ein CCD-Array oder einzeln oder in Gruppen angeordnete Photodioden, das vom Blattgut remittierte Licht erfasst und in Signale zur Bearbeitung in einer Bearbeitungsanlage umwandelt.

Durch die US 4,972,093 ist ein Inspektionssystem bekannt, wobei ein bewegter Prüfling von einer impulsartig angesteuerten Leuchtdiodenanordnung mit einem zwischen 20 ms und 200 ms dauernden Lichtblitz beaufschlagt wird und eine Flächenkamera ein Bild von dem gesamten Prüfling aufnimmt.

Durch die US 5,936,353 ist ein optisches System zur Erzeugung eines beleuchteten Gebildes auf einer Oberfläche eines relativ zum Gebilde bewegten Materials bekannt, wobei eine Beleuchtungseinrichtung mit mehreren Lichtquellen Licht zur Erzeugung des Gebildes emittiert, wobei eine Erfassungseinrichtung mit mindestens einem Detektor von der Oberfläche des Materials remittiertes Licht erfasst, wobei die Lichtquellen auf einer Platine angeordnet sind, wobei die Platine auf einem Träger angeordnet ist, wobei der Träger in seinem Inneren mindestens einen Kanal aufweist, wobei ein flüssiges oder gasförmiges Kühlmedium zur Kühlung der Lichtquellen den Kanal durchströmt. Maßnahmen zur Erzielung einer konstanten Lichtstärke der auf dem Träger angeordneten Lichtquellen sind nicht beschrieben.

Durch die US 2003/0174517 A1 ist ein Inline-Inspektionssystem mit einer in einem Abstand von einem Bedruckstoff angeordneten Beleuchtungseinrichtung mit mindestens einer Lichtquelle bekannt, wobei die mindestens eine Lichtquelle der Beleuchtungseinrichtung durch ein flüssiges oder ein gasförmiges Kühlmedium einer Kühleinrichtung gekühlt ist, wobei zur Steuerung der Lichtquelle der Beleuchtungseinrichtung und der Kühleinrichtung ein Computer vorgesehen ist.

Der Erfindung liegt die Aufgabe zugrunde, eine Druckmaschine mit einem Inline-Inspektionssystem mit einer Beleuchtungseinrichtung zu schaffen, wobei die Beleuchtungseinrichtung eine hohe Konstanz ihrer Lichtabstrahlung aufweist.

Die Aufgabe wird erfindungsgemäß durch die Merkmale des Anspruchs 1 gelöst.

Die mit der Erfindung erzielbaren Vorteile bestehen insbesondere darin, dass die Druckmaschine ein Inline-Inspektionssystem mit einer Beleuchtungseinrichtung aufweist, wobei die Lichtquelle der Beleuchtungseinrichtung ihr Licht trotz Eigenerwärmung oder externer Wärmeeinflüsse zufolge einer Kühlung ihrer Lichtquelle mit einer hohen Konstanz abstrahlt. Eine konstante Lichtabstrahlung ist erforderlich, um eine in ihrem Druckprozess inspizierte Drucksache hinsichtlich ihrer Qualität verlässlich beurteilen zu können, denn eine Veränderung oder Schwankung in der Lichtabstrahlung kann zu einer Fehlinterpretation der von der Drucksache aufgenommenen Bilddaten und damit zu einem nicht sachgerechten Eingriff in den Druckprozess führen. Die vorgeschlagene Lösung hat den Vorteil, dass die thermische Last der Lichtquelle direkt am Entstehungsort abgeführt wird, wodurch sich kurze Regelzeiten zur Einhaltung einer konstanten Lichtabstrahlung erreichen lassen. Auch lässt sich mit den vorgeschlagenen Maßnahmen eine hohe Lichtausbeute erreichen.

Überdies bestehen Vorteile darin, dass das Material, auf dessen Oberfläche ein beleuchtetes Gebilde zu erzeugen ist, nicht in einem im direkten oder im umgelenkten Strahlengang liegenden Brennpunkt des von den Lichtquellen emittierten Lichtes angeordnet sein muss, um das Gebilde in einer ausreichenden Beleuchtungsstärke erscheinen zu lassen. Eine vom Brennpunkt unabhängige Anordnung des Gebildes relativ zu seinem optischen System ist vorteilhaft, weil dann auf eine exakte Maßhaltigkeit bezüglich des Abstandes zwischen dem Gebilde und der Beleuchtungseinrichtung verzichtet werden kann. Das beschriebene optische System ist demnach zum beleuchteten Material abstandstolerant. Außerdem ist zwischen Bauelementen des optischen Systems, die durch eine Verschmutzung, z. B. durch Staub und Abrieb, in ihrer Funktion beeinträchtigt werden können, und dem Material, insbesondere auch zu einer das Material bewegenden Transporteinrichtung, ein ausreichender Abstand vorgesehen, der das optische System und das Material unter den gegebenen Betriebsbedingungen in einer Druckmaschine dauerhaft und zuverlässig außerhalb eines Berührungskontaktes belässt und das optische System vorzugsweise außerhalb der Reichweite der vom bewegten Material aufgewirbelten Schmutzpartikel anordnet.

Ein von der Beleuchtungseinrichtung beleuchteter Beleuchtungsstreifen mit einer sich auf der Oberfläche des Materials orthogonal zu seiner Länge erstreckenden Breite, d. h. ein zweidimensionales, flächiges Gebilde, hat gegenüber einem auf einen Brennpunkt fokussierten linienförmigen, d. h. nur eindimensionalen, beleuchteten Gebilde den Vorteil, dass das beleuchtete Gebilde für eine zur Oberfläche des zumindest in Teilen reflektivem Materials unter einem Reflexionswinkel angeordnete Erfassungseinrichtung zur Erfassung des von der Oberfläche des Materials remittierten Lichtes auch bei einer reliefartigen Ausgestaltung der Oberfläche des Materials zuverlässig als eine virtuelle zeilenförmige Beleuchtungseinrichtung erscheint, weil aufgrund der Breite des Beleuchtungsstreifens sichergestellt ist, dass eine an der Oberfläche des Materials vorhandene Querschnittsfläche eines Erfassungswinkels der Erfassungseinrichtung, in welchem die Erfassungseinrichtung remittiertes Licht zu erfassen vermag, zumindest einen Teil einer sich über die Breite des Beleuchtungsstreifens erstreckenden Querschnittsfläche des von der Beleuchtungseinrichtung emittierten Lichtstrahlenbündels erfasst. Bei einer Vorrichtung, die Material nur linienförmig beleuchtet, besteht die Gefahr, dass das fokussierte Strahlenbündel von einer reliefartigen Oberfläche des Materials außerhalb des Erfassungswinkels der Erfassungseinrichtung reflektiert wird und folglich nicht erfasst werden kann. Im Gegensatz dazu ist das beschriebene optische System auch für eine Bildaufnahme von Material mit einer diffus reflektierenden Oberfläche gut geeignet. Selbst bei einem Material mit einer reliefartigen Oberfläche tritt kaum eine Schattenwirkung auf.

Die Beleuchtungseinrichtung des Inline-Inspektionssystems ist vorzugsweise in Modulen, d. h. in eigenständigen Funktionseinheiten, aufgebaut, was den Vorteil hat, dass eine Zeilenlänge der zeilenförmigen Beleuchtungseinrichtung ohne teure Sonderanfertigung durch einfaches Aneinanderreihen von vorgefertigten, vorzugsweise funktionsgleichen Modulen in der benötigten Anzahl an die Breite des zu beleuchtenden Materials oder zumindest an die Länge des Beleuchtungsstreifens adaptierbar ist. Gleichfalls können auch wahlweise zielgerichtet die Lichtquellen nur in denjenigen Modulen aktiviert werden, die zur Beleuchtung der Breite des zu beleuchtenden Materials oder zumindest der Länge des Beleuchtungsstreifens benötigt werden, was beim Aufbau und beim Betrieb des optischen System für dessen Wirtschaftlichkeit von Vorteil ist.

Die Verwendung von mehreren Lichtquellen je Modul hat den Vorteil, dass sich in der Praxis unvermeidbare Unterschiede in dem von den Lichtquellen abgestrahlten Licht, z. B. in dessen Wellenlänge, durch Mischung der Strahlenbündel von benachbarten Lichtquellen vergleichmässigen und das von der Beleuchtungseinrichtung insgesamt abgestrahlte Licht in seinen optischen Eigenschaften homogenisieren. Wenn in jedem Modul vorzugsweise mehrere Gruppen von Lichtquellen angeordnet sind, wobei sich die den Gruppen zugeordneten Lichtquellen in ihren optischen Eigenschaften unterscheiden, z. B. in der Farbe des von den Lichtquellen einer jeden Gruppe ausgestrahlten Lichtes, können die einzelnen Gruppen von Lichtquellen applikationsabhängig, z. B. nach der Farbe des Lichtes, ausgewählt und angesteuert werden.

Die Beleuchtungseinrichtung des Inline-Inspektionssystems hat den Vorteil, dass sie einen unter Umständen eine große Länge von z. B. über einen Meter aufweisenden Beleuchtungsstreifen durch eine gleichmäßige, bedarfsgerechte Lichtverteilung mit einer homogenen, ausreichend großen Beleuchtungsstärke beaufschlagt und durch seinen modularen, wenig störanfälligen Aufbau auf einfache Weise an die jeweiligen Erfordernisse in einer Druckmaschine anpassbar ist. Da das zu beleuchtende Material nicht in einem Brennpunkt der Beleuchtungseinrichtung anzuordnen ist, entfällt auch die Notwendigkeit für eine exakte Ausrichtung des senkrechten Abstandes der Lichtquellen zur Oberfläche des Materials sowie eine Überwachung dieses Abstandes während des laufenden Einsatzes des optischen Systems, was die Handhabung des optischen Systems Vorort in einem Industriebetrieb erheblich vereinfacht.

Ebenso ist es ein Vorteil, dass ein langsam aufbauender Fehler in einem laufenden Druckprozess frühzeitig erkannt und dessen Ursache vom Bedienpersonal durch eine manuell durchzuführende oder automatisierte Gegenmaßnahme behoben werden kann, bevor die Qualität des Druckerzeugnisses einen als schlecht klassifizierbaren Zustand annimmt und der Druckprozess zu einer Produktion fehlerbehafteter, nicht verkaufsfähiger Druckerzeugnisse führt. Die zusätzlich zu einer Entscheidung über eine gute oder schlechte Druckqualität vorgesehene weitere Entscheidungsschwelle ermöglicht, dass eine geringe, noch im Toleranzbereich liegende Abweichung von in der laufenden Produktion erzeugten Druckbildern angezeigt wird, bevor sich diese Abweichung zu einem kritischen Fehler aufbaut. Dadurch kann frühzeitig eine geeignete Gegenmaßnahme ergriffen werden, ohne das diese Abweichung zu einer Produktion von Druckerzeugnissen mit einer schlechten Qualität führt. Eine Beurteilung der Qualität des Druckerzeugnisses in definierten Qualitätsstufen setzt zur Vermeidung von Fehlinterpretationen voraus, dass die aufgenommenen Bilddaten verlässlich und aussagekräftig sind, was nur mit einer Beleuchtungseinrichtung mit einer Lichtquelle mit einer im Druckprozess konstanten Lichtabstrahlung gegeben ist.

Ausführungsbeispiele der Erfindung sind in den Zeichnungen dargestellt und werden im Folgenden näher beschrieben.

Es zeigen:
- Fig. 1: ein Schema einer Fünffarbendruckmaschine mit einem Lackturm und einer Auslageverlängerung;
- Fig. 2: ein Blockschaltbild zur Systemstruktur eines Systems zur Beurteilung einer Qualität einer von der Druckmaschine produzierten Drucksache;
- Fig. 3: eine Anordnung des Inline-Inspektionssystems in der Druckmaschine;
- Fig. 4: eine perspektivische Darstellung des Inline-Inspektionssystems in der Druckmaschine;
- Fig. 5: eine weitere perspektivische Darstellung des Inline-Inspektionssystems in der Druckmaschine;
- Fig. 6: ein Schema zur Farbdichteregelung mit einem Farbmessstreifen;
- Fig. 7: ein Schema einer Farbbestimmung und Farbregelung anhand des Druckbildes;
- Fig. 8: ein Diagramm zum Verstellvorgang an einer Zonenschraube mit einer Verstellung von Nachbarzonen;
- Fig. 9: ein TCP/IP-Stream beim Senden von Statusdaten von einer Bediensoftware zu einer Leitstandsoftware;
- Fig. 10: ein TCP/IP-Stream beim Setzen von Farbzonenschrauben;
- Fig. 11: ein TCP/IP-Stream beim Senden von Auftragsdaten von der Leitstandsoftware zur Bediensoftware;
- Fig. 12: eine Oberfläche eines bewegten Materials mit einem Beleuchtungsstreifen in einer Draufsicht;
- Fig. 13: eine schematische Darstellung des Inline-Inspektionssystems;
- Fig. 14: eine einzelne Lichtquelle der Beleuchtungseinrichtung;
- Fig. 15: eine zeilenförmige Anordnung von Lichtquellen auf einer gemeinsamen Platine;
- Fig. 16: eine Strahlenbündelung mit einem ersten Spiegel;
- Fig. 17: eine Strahlenbündelung mit einem ersten Spiegel längs zur Länge des Beleuchtungsstreifens;
- Fig. 18: eine Umlenkung des Strahlenbündels aus einem zentralen Bereich der Lichtquelle mit einem zweiten Spiegel;
- Fig. 19: eine Umlenkung des Strahlenbündels aus einem zentralen Bereich der Lichtquelle mit einem zweiten Spiegel, wobei die Strahlung längs zur Länge des Beleuchtungsstreifens stärker gebündelt ist als längs zu dessen Breite;
- Fig. 20: eine Bündelung der Strahlung aus einem zentralen Bereich der Lichtquelle mit einer Konvexlinse;
- Fig. 21: eine Bündelung der Strahlung aus einem zentralen Bereich der Lichtquelle mit einer Konvexlinse, wobei die Strahlung längs zur Länge des Beleuchtungsstreifens stärker gebündelt ist als längs zu dessen Breite;
- Fig. 22: eine zumindest teilweise Überlagerung der Strahlung von zwei benachbarten Lichtquellen;
- Fig. 23: eine Seitenansicht des Inline-Inspektionssystems;
- Fig. 24: eine mit Lichtquellen bestückte Platine auf einem von einem Kühlmedium durchströmten Träger;
- Fig. 25: einen in zwei entgegengesetzten Richtungen von einem Kühlmedium durchströmten Träger;
- Fig. 26: einen Träger mit einer Kühlung mit zwei Peltierelementen;
- Fig. 27: eine Darstellung des Zeitverhaltens der Zeilenkamera und desjenigen der Lichtquellen;
- Fig. 28: eine weitere schematische Darstellung von Funktionseinheiten des Inline-Inspektionssystems;
- Fig. 29: eine zweidimensionale Darstellung eines Pixelfeldes;
- Fig. 30: ein Referenzbild mit Minimal- und Maximalwerte für jedes Pixel;
- Fig. 31: ein Vergleich des aktuell aufgenommenen Druckbildes mit seinem Referenzbild;
- Fig. 32: eine Darstellung der Bewertung der Abweichung zum Referenzbild über zwei Entscheidungsschwellen.

Nach dem heutigen Stand der Erkenntnis sind im Offsetdruck im Bereich der Inline-Begutachtung zwei wesentliche Aspekte der Qualitätssicherung zu berücksichtigen. Zum einen muss eine Farbkonstanz im Sinne einer Dichte- und Farbortbestimmung während der Produktion gewährleistet sein, zum anderen müssen typische Fehler, wie z. B. Butzen oder Tonen, detektiert werden können.

Aus den in der Praxis gesammelten Erfahrungen hängt eine "Gutproduktion" von einer großen Anzahl von Randbedingungen ab, die nicht allein von Qualitätsdefinitionen eines QS-Managements festgelegt werden können. Aufgrund der in der Praxis vorkommenden Schwankungsbreiten ist eine Farbbestimmung und Inspektion gefordert, die die typischen Schwankungen in der Qualität der produzierten Drucksachen auffängt. Zu nennen sind hier zulässige Farbschwankungen, Lageverschiebungen des Motivs oder Verschiebungen von Objekten innerhalb eines Motivs. Weiterhin ist zu berücksichtigen, dass i. a. bestimmte Bereiche der Vorlage inspektionswürdig sind, andere hingegen nicht.

Ein wichtiger Schritt bei der Berücksichtigung dieser typischen Schwankungen in der Qualität der produzierten Drucksachen ist die näherungsweise technische Umsetzung der menschlichen Farb- und Konturwahrnehmung in einem Kamera-basierten System. Durch geeignete Farbraumtransformationen mit nachgeschalteten Analysatoren zur Farbbestimmung und Steuerung ist es möglich, die Inspektion und die Farbregelung an einer Druckmaschine, z. B. einer Bogenoffsetdruckmaschine, praxisgerecht und wahrnehmungsorientiert durchzuführen.

Das hier beschriebene Inline-Inspektionssystem zur Beurteilung einer Qualität einer von einer Druckmaschine produzierten Drucksache weist mindestens eine Bildaufnahmeeinheit, insbesondere eine Kamera, vorzugsweise ein Farbzeilenkamerasystem, auf. Das Farbzeilenkamerasystem verwendet vorzugsweise eine Farbzeilenkamera mit bis zu 2048 Bildpunkten pro Bildzeile. Das Inline-Inspektionssystem zur Beurteilung der Qualität der von der Druckmaschine produzierten Drucksache ist für die Inline-Inspektion und eine Inline-Farbregelung bei Mittelformatmaschinen (Schöndruck) ausgelegt. Inline-Inspektion bedeutet, dass ein Bedruckstoff während seines Transports durch die Druckmaschine inspiziert wird. Das Inline-Inspektionssystem stellt sicher, dass eine vom Bediener definierte Qualität während des gesamten Produktionsprozesses gehalten wird.

Das Inline-Inspektionssystem zur Beurteilung der Qualität der von der Druckmaschine produzierten Drucksache besteht im Wesentlichen aus drei Komponenten: mindestens einer Bildaufnahmeeinheit, einer Kamera- und Beleuchtungselektronikeinheit und einem Schaltschrank mit einem Bildverarbeitungssystem.

Die Bildaufnahmeeinheit wird in die Druckmaschine eingebaut. Sie weist z. B. eine Farbzeilenkamera, eine Konstantlichtbeleuchtung oder alternativ eine Blitzlichtbeleuchtung, insbesondere eine getriggerte Linienbeleuchtung, auf, wobei sowohl die Konstantlichtbeleuchtung als auch die Blitzlichtbeleuchtung jeweils mehrere nebeneinander, d. h. zeilenförmig, angeordnete Lichtquellen aufweisen, wobei die Beleuchtungseinrichtung jeweils z. B. mit Wasser gekühlt ist, und einen Drehgeber, wobei der Drehgeber z. B. eine Auflösung von 10.000 Strichen hat.

Wenn die Druckmaschine als eine Widerdruckmaschine ausgelegt ist und im Schöndruck und Widerdruck produziert, sind mindestens zwei verschiedenen produzierenden Zylindern dieser Druckmaschine jeweils eine Bildaufnahmeeinheit zugeordnet, wobei mindestens eine Bildaufnahmeeinheit, insbesondere eine Kamera, vor einer Wendeeinrichtung für einen in der Druckmaschine zu bedruckenden Bogen und eine weitere Bildaufnahmeeinheit, insbesondere eine weitere Kamera, nach dieser Wendeeinrichtung hinter dem letzten Druckwerk der Druckmaschine angeordnet sind. Die Signale der beiden Bildaufnahmeeinheiten werden z. B. von demselben Bildverarbeitungssystem in einem Duplexmodus weiterverarbeitet und ausgewertet.

Die Kamera- und Beleuchtungselektronikeinheit umfasst alle notwendigen Funktionseinheiten zur Leistungsversorgung der Beleuchtungseinheit und der Signalaufbereitung der Kamera. Diese Einheit wird in der Nähe der Bildaufnahmeeinheit an einem geeigneten Ort untergebracht. Sie stellt eine homogene Ausleuchtung des durch die Druckmaschine transportierten Bogens sicher. Mit Hilfe einer Lichtmessfunktion wird während des Maschinenlaufs z. B. zyklisch geprüft, ob die Leuchtmittel einwandfrei, d. h. in ihrem vorgesehenen Arbeitsbereich funktionieren.

Der Schaltschrank mit dem Bildverarbeitungssystem umfasst insbesondere z. B. eine Stromversorgung des Bildverarbeitungssystems sowie einen Bildverarbeitungsrechner vorzugsweise inklusive einer Schnittstelle für die Bedienung zu einem Leitstandrechner (TCP/IP) sowie der Anschlussmöglichkeit eines Monitors, z. B. eines Farbmonitors, zur Überwachung der Druckprodukte und Fehleranzeige im laufenden Betrieb. Bei Widerdruck ist zudem eine Monitorumschaltung vorgesehen.

Für eine Bedienung des Systems zur Beurteilung der Qualität der von der Druckmaschine produzierten Drucksache kann eine Bedienoberfläche zunächst vorübergehend auf einem zweiten PC realisiert sein, bevor die Bediensoftware bei einem Serienprodukt in einem der Druckmaschine zugeordneten Leitstand integriert wird.

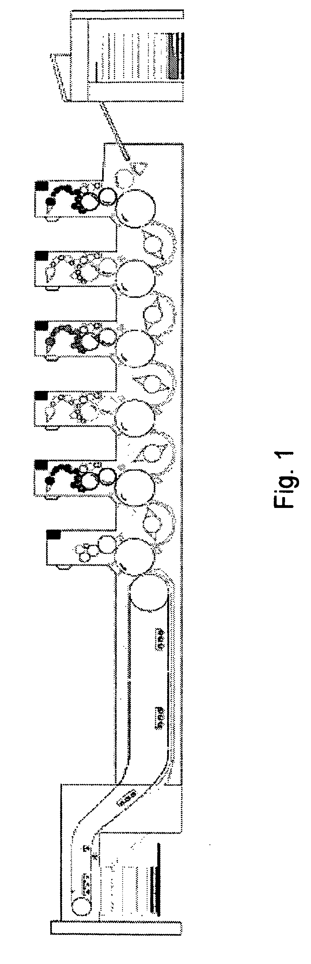

Die Kamera- und Beleuchtungseinheit ist z. B. in einer in der Fig. 1 dargestellten Bogenoffsetdruckmaschine, z. B. einer Fünffarbendruckmaschine mit einem den Druckwerken nachgeordneten Lackturm und einer Auslageverlängerung, eingebaut. Eine vorhandene Kettenführung im aufsteigenden Ast eines Kettenlaufs stabilisiert einen in der Druckmaschine transportierten Bogen während eines Lern- und Inspektionsprozesses. Zur Vereinfachung der Darstellung zeigt die Fig.1 eine Bogenoffsetdruckmaschine allein für den Schöndruck.

Die Inspektion des Bedruckstoffes, insbesondere eines Druckbogens, erfolgt durch das Inline-Inspektionssystem zur Beurteilung der Qualität einer von der Druckmaschine produzierten Drucksache z. B. am im Produktionsverlauf letzten Druckwerk der im Produktionsverlauf vorzugsweise nacheinander mehrere Druckwerke aufweisenden Druckmaschine oder an dem den Druckwerken nachgeordneten Lackturm.

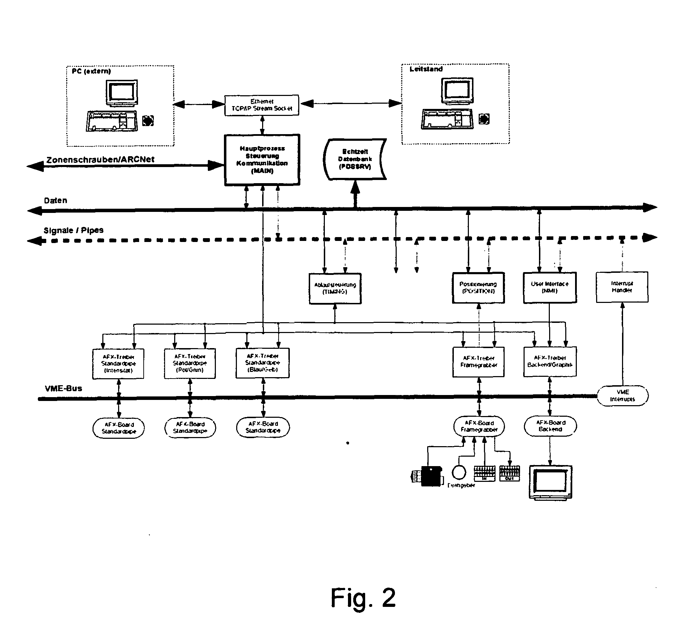

Gemäß dem in der Fig. 2 dargestellten Blockschaltbild zur Systemstruktur eines Systems zur Beurteilung der Qualität einer von der Druckmaschine produzierten Drucksache wird eine Bildaufnahme z. B. mit einer 3-Chip-Farb-CCD-Zeilenkamera mit z. B. 2048 Bildpunkten durchgeführt. Es ist sichergestellt, dass der gesamte Bogen während einer maximalen Maschinengeschwindigkeit von z. B. 18.000 Bogen/h inspiziert werden kann. Falls die Druckmaschine als eine Rollendruckmaschine ausgebildet ist, ist eine Materialbahn, z. B. eine Papierbahn, auch bei einer maximalen Maschinengeschwindigkeit von z. B. 15 m/s verlässlich zu inspizieren. Die Auflösung beträgt z. B. ca. 0,25 mm² pro Bildpunkt bei einer Pixelkantenlänge von z. B. ca. 0,5 mm.

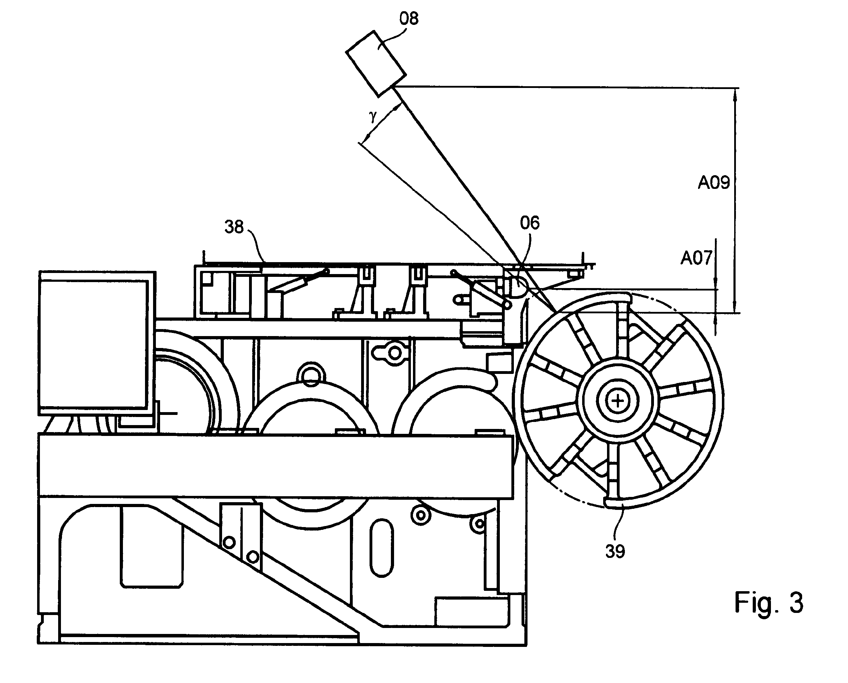

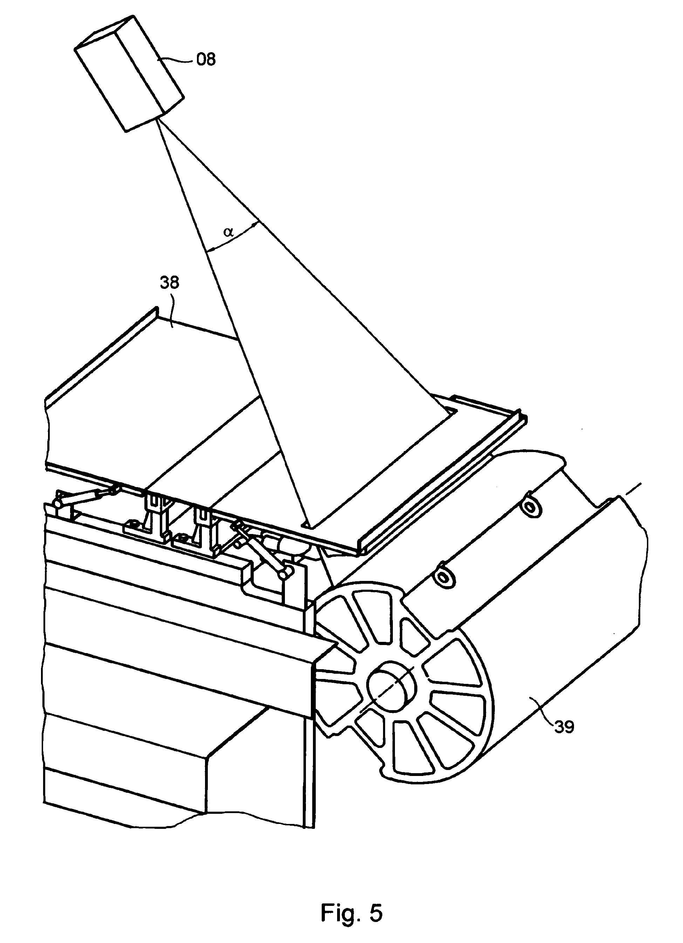

Einzelheiten zur Anordnung des Inline-Inspektionssystems innerhalb einer beispielhaft gewählten Bogendruckmaschine zeigen die Fig. 3 bis 5. Eine vorzugsweise nahe einem Druckwerkszylinder 39, z. B. einem Gegendruckzylinder 39, angeordnete Beleuchtungseinrichtung 06 erzeugt vorzugsweise einen Beleuchtungsstreifen 01 auf einem vom Druckwerkszylinder 39 transportierten Bogen. Dabei ist die Beleuchtungseinrichtung 06 vorzugsweise innerhalb eines einen Teil des Druckwerks der Druckmaschine umgebenden Schutzes 38, z. B. unterhalb einem Fußtritt 38 im Galeriebereich der Druckmaschine angeordnet. Vom Beleuchtungsstreifen 01 remittiertes Licht wird von einer zum Druckwerkszylinder 39 beabstandet angeordneten Kamera 08; 201 innerhalb eines bestimmten Erfassungswinkels α erfasst. Die Kamera 08; 201 erfasst vom Beleuchtungsstreifen 01 remittiertes Licht vorzugsweise durch einen vorzugsweise schmalen Spalt oder Schlitz in dem den Druckwerkszylinder 39 abdeckenden Schutz 38 oder Fußtritt 38, wobei sich dieser Spalt oder Schlitz quer zur Transportrichtung des Bedruckstoffes erstreckt.

Das Bildverarbeitungssystem besteht z. B. aus einem VMEbus-Rack mit z. B. insgesamt sechs Einsteckkarten. Neben einer CPU (PowerPC; Echtzeit-Betriebssystem OS9), einem Framegrabber zur Bildaufnahme und Bilddatenvorverarbeitung sowie einer Grafikkarte zur Bildanzeige und Fehlereinblendung sind z. B. drei Bildverarbeitungskarten für das Lernen und die Inspektion der Druckbogen vorhanden.

Das System ist z. B. mittels einer Ethernet-Schnittstelle mit einem Bedienrechner, dem Bedien-PC, d. h. z. B. entweder einem externen PC oder einem Leitstand-Rechner, vernetzt. Über den Bedien-PC werden alle Einstellungen, die für die Inspektion und Farbregelung notwendig sind, vorgenommen. Die Bediensoftware ist vorzugsweise unter allen aktuellen Microsoft-Betriebssystemen lauffähig.

Der Bedienrechner kann an externe Datennetze angeschlossen werden, sodass Wiederholaufträge von einer zentralen Datenbank und gegebenenfalls Daten aus der Druckvorstufe, z.B. von einer CIP3-Station, geladen werden können.

Eine Ansteuerung der Farbzonenverstellung im Farbwerk der jeweiligen Druckwerke erfolgt z. B. mittels ARCNet. Die VMEbus-CPU ist mit einer ARCNet-Karte ausgestattet.

An die Grafikkarte des Bildverarbeitungssystem wird der sogenannte Fehlermonitor angeschlossen. Dieser zeigt ein Live-Bild der Kamera. Die Druckfehleranzeige wird in das Kamerabild eingeblendet, sodass der Bediener sofort in der Lage ist, den Fehlerort und gegebenenfalls die Fehlerursache zu lokalisieren. Der Fehlermonitor zeigt sowohl auf dem Bedruckstoff kurzzeitig auftretende Druckfehler, z. B. Farbspritzer, Wasserflecken oder Papierfehler, als auch dauerhafte Druckabweichungen, z. B. eine Über- oder Unterfärbung einzelner Druckfarben oder ein Tonen, an.

Im Inline-Inspektionssystem zur Beurteilung der Qualität einer von der Druckmaschine produzierten Drucksache ist ein Prozess-Lernmodus integriert, welcher in der Lage ist, den aktuellen Qualitätsstandard automatisch während der Gutproduktion zu erlernen. Die Programmierung eines Modells ist also nicht notwendig. Mit Hilfe des Prozess-Lernmodus werden Referenzen insbesondere für das Farbmodell und das Intensitätsmodell erzeugt, die zum Vergleich für die Inspektion und Farbbestimmung herangezogen werden. Der Lernmodus umfasst insbesondere folgende Funktionen: Lernen von Referenzen, Erweitern gelernter oder gespeicherter Referenzen, Eingabe der Anzahl der gewünschten Lernbogen, Definieren des Fensters des Inspektionsbereiches, Zeigen des gelernten oder gespeicherten Referenzbildes, Eingabe der Maske für einen nicht inspizierten Bildbereich, Bearbeiten des Referenzbildes, Editieren und Kopieren von Masken.

Durch die Druckmaschine transportierte Lernbogen werden ausgeschleust, um eine Kontrolle von einem eventuell eingelernten Druckfehler, eine Vermessung mit einem Handspektrometer oder eine visuelle Überprüfung möglich zu machen. Die Referenzmodelle sowie alle anderen relevanten Daten werden in einem Auftragsspeicher abgelegt. Es ist jederzeit möglich, für Wiederholaufträge den Auftragsspeicher zu lesen.

Darüber hinaus ist das Inline-Inspektionssystem in der Lage, zulässige Änderungen im Fortdruck, die vom Inline-Inspektionssystem als Fehler gewertet werden, bei laufender Produktion hinzuzulernen. Das Inline-Inspektionssystem passt sich somit adaptiv an den aktuellen Qualitätsstandard an und steuert oder regelt z. B. das Farbwerk und/oder ein Seiten- und/oder Umfangsregister der Druckmaschine.

Das menschliche Auge ist in der Lage, relativ kleine Farbänderungen zu detektieren. Jedoch ist die Farbwahrnehmung des Menschen auf eine Detektion von Flächen ausgelegt. Kleine punktförmige Farbänderungen werden nicht detektiert. Das Farbanalyse-Modell berücksichtigt diesen physiologischen Effekt. Es werden die den Farbraum der Kamera aufspannenden Farben Rot, Grün und Blau in einen Farbraum transformiert, der als Gegenfarbenmodell bezeichnet wird. Das Gegenfarbenmodell entspricht einer elektronischen Nachstellung der menschlichen Farbwahrnehmung. Darin existieren zwei Gegenfarbenkanäle, die äußerst empfindlich auf Farbänderungen reagieren. Insbesondere wird ein Kippen der Graubalance von diesen Kanälen zuverlässig erkannt.

Das Gegenfarbenmodell kann auch auf der Basis der Offsetdruckfarben CMYK implementiert sein, wobei dieses Farbmodell gegenüber dem empfindungsgemäßen Farbmodell auf ein subtraktives Farbenmischen (Druckverfahren) ausgerichtet ist.

Intensitätsabweichungen, d. h. Änderungen der Farbdichte, werden über eine Grauwertanalyse detektiert. Dieses Verfahren hat insbesondere in Bereichen unbunter Farben, bei einer Über- und Unterfärbung sowie bei kleinen Fehlern, z. B. kleine Farbspritzer oder Papierfehler, seine Stärken.

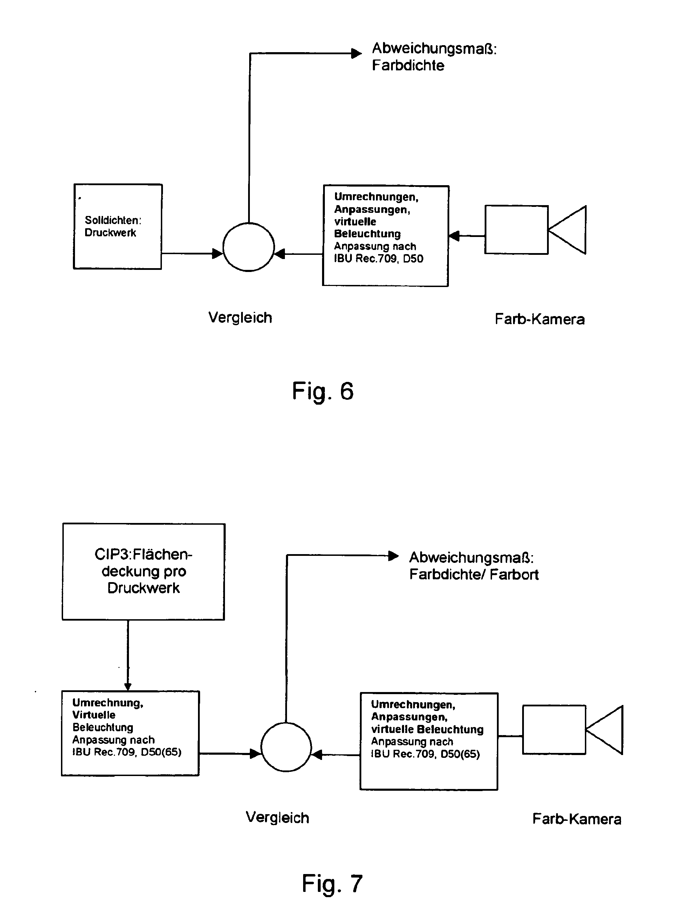

Eine Farbregelung kann je nach den im konkreten Fall vorliegenden Voraussetzungen nach zwei verschiedenen Verfahren erfolgen. Wenn Farbmessstreifen mit ausreichend großen Farbfeldern vorhanden sind, werden gemäß dem Schema zur Farbdichteregelung mit einem Farbmessstreifen in der Fig. 6 zunächst die Solldichten für die einzelnen Farben eingegeben. Die Position des Messkontrollstreifens wird vom Bediener am Monitor markiert. Danach werden die Felder des Streifens automatisch in Bezug auf Skalenfarben analysiert und die jeweilige Istdichte bestimmt. Sonderfarben sind vom Bediener im Messstreifen zu markieren. Anhand der Abweichungen von einer Solldichte und der vorliegenden Istdichte werden die Farbzonen an einem Farbwerk der Druckmaschine gestellt. Die jeweiligen Abweichungen werden grafisch und numerisch angezeigt. Vom Inline-Inspektionssystem werden Vorschlagswerte für die Farbzonenstellung angegeben. Diese können wahlweise manuell übernommen oder vollautomatisch im geschlossenen Regelkreis verwendet werden. Mit Hilfe der Farbmessstreifen kann mit Hilfe der Rasterfelder auch eine Tonwertzunahme bestimmt werden.

Die Algorithmen zur Dichtebestimmung in Farbmessstreifen können für jeden Bogen durchlaufen werden. Auch eine gleitende Mittelwertbildung der Messwerte über eine beliebige Bogenanzahl ist möglich. Messungenauigkeiten, die durch den Einfluss von Schwankungen des Drucks, durch ein Rauschen der Kamera, z. B. ein Photonenrauschen oder ein Quantisierungsrauschen des AD-Wandlers, oder durch eine Instabilität der von der Beleuchtungseinrichtung abgestrahlten Lichtmenge entstehen, werden auf diese Weise zuverlässig eliminiert oder zumindest in ihrem Störeinfluss minimiert.

Eine Kalibrierung des Dichtemesssystems erfolgt mit Messbogen, die in regelmäßigen Abständen durch die Maschine gefahren werden. Bei der Kalibrierung wird automatisch eine Farbbalance, ein Kontrast und eine Helligkeit justiert. Weiterhin kann das Normlicht für die Messung festgelegt werden, z. B. wie üblich D50 oder D65. Eine Re-Kalibrierung ist in der Praxis zumeist nicht häufiger als einmal pro Woche nötig.

Der Messstreifen weist eine Feldbreite und eine Feldhöhe jeweils z. B. von ca. 5 mm bis 6 mm auf. Die Messfeldgröße, die ein 2° Normbeobachter benötigt, muss im Messfeld sicher untergebracht werden. Der Messstreifen besteht aus mehreren gleichen Segmenten, wobei ein regelmäßiger Aufbau innerhalb eines Segmentes erfolgt.

Ein anderes Verfahren zur Farbregelung sieht, wie es ein Schema in der Fig. 7 darstellt, eine Farbbestimmung und Farbregelung anhand des Druckbildes vor. Voraussetzung dafür ist, dass die Flächendeckung pro Druckfarbe mit einer Auflösung von 10 < dpi < 40 aus einer Vorstufe, z. B. CIP3, bekannt ist, und dass "signifikante" Druckbereiche pro Farbzone- oder Farbzonenbereich vorhanden sind. Signifikant sind Druckbereiche dann, wenn eine der Druckfarben in diesem Bereich dominant ist. Die Bestimmung der signifikanten Druckbereiche erfolgt automatisch durch Auswertung von Daten aus der Vorstufe.

Die Farbbestimmung und die Ableitung von Stellgrößen für die Farbregelung erfolgt anhand des Druckbildes selbst. Hierzu wird eine Transformation der Kamerabilddaten in den CMYK-Raum durchgeführt.

Die Analyse des Druckbildes erfolgt anhand einer Farbintegration der signifikanten Druckbereiche innerhalb von Längsstreifen, die in ihrer Anzahl vorzugsweise der Anzahl der Zonenschrauben entsprechen. Diese Streifen sind nochmals horizontal aufgeteilt. Innerhalb dieser so entstandenen Flächen wird anhand der Farbänderungen und der Zonendichte die entsprechende Zone gestellt. Durch entsprechende Mittelung über mehrere Bogen werden zulässige Prozessschwankungen ausgeglichen.

Eine aus der Messung berechnete Regelabweichung für die Farbgebung wird für jede Farbzone in einen Stellbefehl zur Ansteuerung der betreffenden Zonenschraube umgesetzt.

Eine Änderung der Farbzufuhr innerhalb der Druckmaschine benötigt eine gewisse Zeit, bevor diese im Druckbild sichtbar wird. Dieses Verhalten ist durch die Art der Farbübertragung in der Druckmaschine begründet. Um diesen Vorgang zu beschleunigen, wird als Regler ein Integralregler mit einem Proportionalanteil, kurz PI-Regler, vorgesehen. Dieser Regler hat den Vorteil, dass zusätzlich zu einem stationären Anteil (1-Anteil) für eine gewisse Zeit ein fehlerproportionaler Anteil für eine zusätzliche/verminderte Farbzufuhr sorgt und so den Regelvorgang beschleunigt.

Die durch den Proportionalanteil verursachte zusätzliche oder verminderte Farbzufuhr wird vereinfacht für eine gewisse Zeit, d. h. für eine gewisse Anzahl von Zylinderumdrehungen, zugelassen. Nach Ablauf dieser Zeit werden alle Farbzonen auf den stationären Zustand gefahren.

Weiterhin wird der Regelkreis dahingehend vereinfacht, dass ein zyklisches Verfahren mit den Schritten Messen, Stellen und Warten realisiert wird. Nach Abschluss der Wartezeit, d. h. nach einer gewissen Anzahl von Zylinderumdrehungen, wird mit einer neuen Messung ein neuer Zyklus gestartet. Es handelt sich also trotz des geschlossenen Regelkreises um ein offenes Wirkungsprinzip, da die maßgebliche Zeitkonstante durch die Zeit zwischen Stellung der Zonen und einer Reaktion auf dem Papier festgelegt ist. Da diese Zeit z. B. proportional zu einigen zehn Bogen ist, ist hier ein offenes Wirkungsprinzip realisiert. Weiterhin wird die Regelung selbst als Lageregelung ausgeführt, d. h. die Öffnung der einzelnen Zonen wird gestellt und für eine gewisse Zeit in dieser Stellung gehalten. Um schnellstmöglich die Solldichte zu erreichen, wird zugelassen, dass im Fall einer Farbzufuhr die Zonen gegebenenfalls für eine gewisse Zeit überregelt werden.

Während des Fortdrucks kann der Bediener manuell Korrekturwerte, d. h. Sollwerte, für die Zonenschrauben eingeben. Diese Änderungen werden im Signalfluss wie eine Regelabweichung behandelt.

Im Regelalgorithmus werden alle die Farbgebung beeinflussenden Parameter integriert. Hierzu zählen insbesondere das Farbverhalten, d. h. eine Deckung der Farbe, das Papierverhalten sowie das Farbübertragungsverhalten des Farbkasten. Hierbei sind die Farbe und das Papier auftragsabhängige Parameter.

Die Änderung der Farbzufuhr in einer Farbzone hat durch die Verreibung der Farbe bei der Farbübertragung innerhalb des Druckwerkes auch Auswirkungen auf ihre Nachbarzonen. Um diesen Effekt zu berücksichtigen, werden die benachbarten Farbzonen zu einem gewissen Anteil proportional zur verstellten Farbzone mitverstellt. Bei entsprechend großen Verstellungen kann sich diese Verstellung auf weitere Nachbarzonen auswirken. Jede Verstellung einer Farbzone, sei es automatisch oder manuell, "erzeugt" neue Sollwerte für die Nachbarzonen.

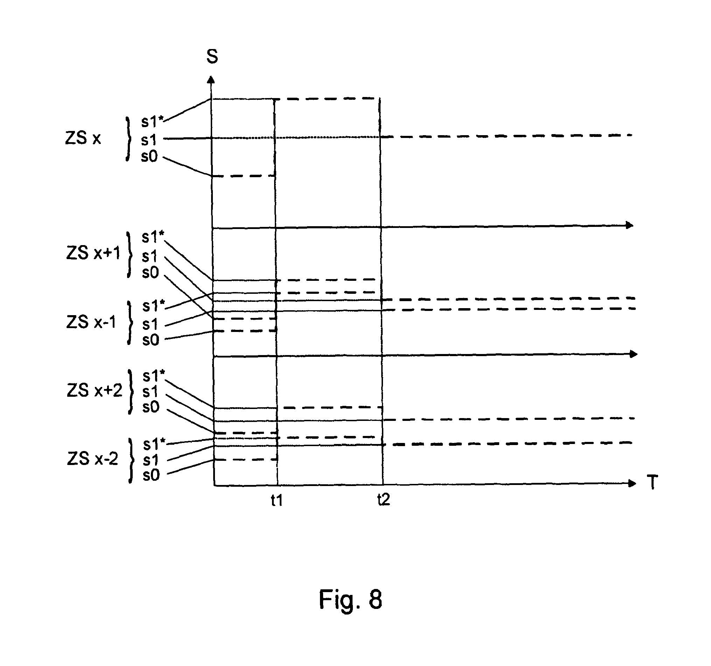

Der Verstellweg jeder Farbzone ist beschränkt. Wenn eine Zone mehr als "ganz auf" verstellt werden soll, kann zusätzliche Farbe nur durch Änderung der Streifenlänge auf dem Duktor des Farbwerks erreicht werden. Eine Änderung der Streifenlänge auf dem Duktor erhöht die Farbzufuhr in allen Farbzonen. In diesem Fall wird die Farbzufuhr für die betreffende Farbzone entweder begrenzt oder die zusätzliche Farbzufuhr durch Änderung der Streifenlänge muss an den anderen Farbzonen durch Schließen aller anderen Farbzonen kompensiert werden. Wird die untere Grenze der Zonenverstellung erreicht, nämlich wenn eine Farbzone geschlossen wird, ist keine weitere Kompensation möglich. Wird für eine Farbzone die obere Grenze erreicht oder muss diese für den stationären Zustand überschritten werden, dann ist in jedem Fall die Streifenlänge auf dem Duktor zu ändern, und alle anderen Farbzonen sind entsprechend anzupassen, wie es das Diagramm der Fig. 8 erkennen lässt. In der Fig. 8 bezeichnet "ZSx" eine Zonenschraube im Farbwerk an der Position "x". Mit "ZSx+1" oder "ZSx-1" ist eine zur Zonenschraube "ZSx" benachbarte Zonenschraube und mit "ZSx+2" oder "ZSx-2" eine weitere benachbarte Zonenschraube bezeichnet. Das Diagramm der Fig. 8 zeigt Stellungen der Zonenschraube"ZSx+1" oder "ZSx-1" und "ZSx+2" oder "ZSx-2" im Vergleich zur Stellung der Zonenschraube "ZSx", wobei Verstellungen all dieser Zonenschrauben "ZSx", "ZSx+1" oder "ZSx-1" und "ZSx+2" oder "ZSx-2" gemäß dem auf der Abszisse des Diagramms aufgetragenen Zeitverlauf zeitgleich und in gegenseitiger Abhängigkeit in einem aufeinander abgestimmten Verhältnis erfolgen.

Im Folgenden wird weiter auf den Aufbau des Inline-Inspektionssystems eingegangen. Die vorzugsweise digital arbeitende Bildaufnahmeeinheit umfasst z. B. eine speziell für den Bogendruck entwickelte Beleuchtungseinheit und eine Farb-CCD-Zeilenkamera. Das Objektiv ist speziell an die hochauflösende Kamera angepasst, weist einen abnehmbarem Filter, z. B. einen UV-Filter als Objektivschutz auf und kann bedienerfreundlich justiert werden. Im Servicefall kann die Kamera sowie das Objektiv einfach ausgetauscht werden. Die Bildaufnahmeeinheit ist gegen mechanische und elektromagnetische Störungen geschützt. Zur Beleuchtung werden z. B. speziell für diesen Anwendungsfall entwickelte hochfrequenzgetaktete Beleuchtungsquellen verwendet. Die Anordnung der Leuchtmittel innerhalb der Beleuchtungseinheit ist z. B. speziell für die Applikation im Bogendruck angepasst. Die Leuchtmittel können einfach getauscht werden.

Das Bildaufnahmemodul (Frame Grabber) setzt das eingehende Videobild in einen digitalen Videostrom um. Dieser Videostrom wird im Frame Grabber einer Helligkeitsanpassung (Shading-Korrektur), einer wahrnehmungsorientierten Farbanpassung und der Farbraumtransformation unterzogen. Dieser digitale Videostrom wird zur späteren Bearbeitung im Speicherbereich des Bildaufnahmemoduls abgelegt. Die Bildaufnahme und Bildauswertung wird in Maschinen-Echtzeit durchgeführt.

Das Inline-Inspektionssystem ist z. B. mit einer Positionierungseinheit ausgestattet, die in der Lage ist, eine Bildpositionierung vorzunehmen. Durch Unschärfen in der Transportbewegung des Bogens kann es notwendig sein, das aufgenommene Druckbild für jede Aufnahme im Inline-Inspektionssystem zu positionieren. Während des Lernprozesses wird automatisch im Inline-Inspektionssystem eine Referenzposition für jeden Bogen ermittelt.

In einem Lernmodus nimmt das Inline-Inspektionssystem während der Produktion Bogen mit der CCD-Kamera auf und bildet ein Computermodell mit allen Varianten einer akzeptablen Druckqualität. Ausgehend von einer korrekten Farbeinstellung werden in der Lernphase Druckbogen oder Druckexemplare erfasst, analysiert und ausgewertet. Der Lernmodus ist in der Lage, Referenzen in Maschinen-Echtzeit zu generieren. Nach dem Lernen schaltet das Inline-Inspektionssystem automatisch in den Farbmess- und Inspektionsmodus um. Mit Hilfe der erlernten Referenzen wird die aktuelle Produktion nunmehr geprüft. Es ist allerdings zu jeder Zeit möglich, einen Standard innerhalb des Referenzenspeichers durch Dazulernen zu erweitern.

Es werden mehrere Bogen erfasst und ausgewertet. Das RGB-Signal der Videokamera wird in die Farbauszüge CMYK umgerechnet. Jeder Farbauszug wird in Streifen, entsprechend der Farbzonen, unterteilt. Innerhalb jeder Zone wird der Flächenanteil des betreffenden Farbauszuges bestimmt. Dieser Wert wird über die erfassten Bogen gemittelt. Der gemittelte Wert jedes Flächenanteils aus der Lernphase wird als Sollwert für die Kontrollphase übernommen.

In dem Inspektionsmodus wird jedes Bild mit den Analyse-Modellen und Referenzen verglichen. Die Empfindlichkeit des Inline-Inspektionssystems kann vom Bediener mittels weniger Inspektionsparameter, wie z. B. der Grauwert- und Farbtoleranzen sowie Fehlergrößen, auf die individuellen Bedürfnisse eingestellt werden. Der Inspektionsmodus umfasst z. B. folgende Funktionen: Endlosinspektion des laufenden Produktionsauftrages, Eingabe von Toleranzen für die Inspektion, Definieren eines Gitternetzes für die horizontale und vertikale Aufteilung des Inspektionsbildes. Die Eingabe von Inspektions-Parametern, die das Inline-Inspektionssystem beeinflussen, kann wahlweise durch ein "Password" gesichert werden. Das "Password" kann geändert werden oder es können mehrere benutzerspezifische "Passwords" vergeben werden. Während der Inspektion können z. B. bis zu 96 Einzelnutzen durch das Inspektionssystem-Gitternetz getrennt statistisch erfasst werden. Fehlernutzen werden durch einen Gitterrahmen, der den optischen Verhältnissen angepasst ist, gekennzeichnet.

Alle gespeicherten variablen Eingabedaten bleiben beim Abschalten und Wiedereinschalten des Inline-Inspektionssystems erhalten. Alle Eingabedaten und Produktionsabläufe werden in einem Logfile gespeichert. Dieses Logfile stellt grundsätzliche Daten bei einem Stromausfall für die Statistik wieder zur Verfügung.

Der Fehleranalyse-Prozessor analysiert den Bildvergleich, der vom Bildprozessor generiert wurde. Er erzeugt ein Fehlerbild, welches in das Live-Bild des Fehlermonitors eingeblendet wird. Dieses erlaubt dem Bediener, sofort nach Analyse des Bildes in den Maschinenprozess einzugreifen.

Auf einem Leitstandrechner wird ein Mensch-Maschine-Interface implementiert, dessen sämtliche Verbindungen vorzugsweise über Optokoppler erfolgen. Die Schnittstelle ist z. B. eine Ethernet-Verbindung mit TCP/IP.

Das Inline-Inspektionssystem ist vorzugsweise mit einem Festplattenspeicher ausgestattet, der über genügend Kapazität verfügt, um verschiedene Aufträge inklusive aller Toleranzen und Statistiken abzuspeichern. Dieser Auftragsspeicher ist z. B. für ca. 2.000 Aufträge ausgelegt. Durch eine Festplattenerweiterung kann die Anzahl der Aufträge entsprechend erhöht werden.

Während des Lernprozesses wird anhand der Modelle festgestellt, ob ein einzulernender Bogen im großen Maße fehlerbehaftet ist. Sollte dies der Fall sein, wird der Bogen nicht miteingelernt, also nicht mit in das aktuelle, einen Qualitätsstandard definierenden Referenzbild aufgenommen. Dieser adaptive Prozess sorgt dafür, dass keine unakzeptablen Bogen in ein Referenzbild eingelernt werden.

Der Bildvergleich wird in Maschinen-Echtzeit z. B. bis zu einer Geschwindigkeit von 18.000 Bogen pro Stunde durchgeführt.

Ein Fehler in der Qualität einer von der Druckmaschine erzeugten Drucksache, z. B. eine Über- oder Unterfärbung, Farbabweichungen und geometrische Effekte, wird in Bezug auf wahrnehmungsorientierte Fehlergrößen detektiert. Die Farbabweichungen führen zu einem Abweichungsmaß, das zur Stellung der Zonenschrauben genutzt wird. Eine Abweichung in der Farbdeckung von weniger als 10% wird nicht geregelt. Die Kamera garantiert eine 100 %-ige Detektion des gesamten Bogens.

Zur Bedienung des Inline-Inspektionssystems sind folgende Einstellungen vornehmen:
- Solldichten
- Position des Messkontrollstreifens
- Druckwerkszuordnung der Farben
- Grauwertempfindlichkeit
- Farbkanalempfindlichkeit
- Fehlergrößen

Bei der Inspektion können Fehler im Kontrast und in der Größe definiert werden. Die Fehlergröße kann minimal einen Bildpunkt betragen.

Das Maschineninterface übermittelt einen Alarm, wenn ein oder mehrere hintereinander folgende Bogen mit Druckfehlern identifiziert worden sind. Hierbei wird unterschieden, ob es sich um eine Farbabweichung handelt, die zu einer Zonenschraubenverstellung führt, oder ob es sich um einen geometrischen Fehler handelt, d. h. einen Kurzzeitfehler.

Auch stehen z. B. an SPS-Ausgängen Informationen zur Verfügung, ob ein Gut- oder Schlechtbogen vorliegt, das Inline-Inspektionssystem aktiv ist oder sich im Lernmodus befindet.

Zur genauen Analyse eines fehlerhaften Bogens stehen zwei Modi zur Verfügung, wobei in einem Modus das Inline-Inspektionssystem nach einem Fehler stoppt und in dem anderen Modus das Inline-Inspektionssystem nur vorübergehend anhält. Im Stop-nach-Fehler-Modus wird das Bild des Bogens inklusive der Fehleranzeige eingefroren, sobald das Inline-Inspektionssystem einen Fehler auf einem Bogen detektiert. Der Bediener kann die Fehleranzeige in Ruhe betrachten und bewerten und eventuell mit zugehörigem Druckbogen verifizieren. Das eingefrorene Bild muss per Tastendruck wieder freigegeben werden. Die Inspektion läuft im Hintergrund weiter. Im Modus Stop-und-Weiter wird das Bild nach einer Fehlerdetektion automatisch eingefroren und nach einer einstellbaren Dauer von z. B. ca. 15 Sekunden automatisch wieder freigegeben. Der Bediener erhält somit die Möglichkeit, das Bild eine gewisse Zeit zu betrachten, ohne gezwungen zu sein, das Inline-Inspektionssystem manuell wieder freizuschalten.

Während der Produktion wird jeder Bogen analysiert und eine Gut-, Warnung- und Schlechtbogen-Statistik geführt. Weiterhin werden alle relevanten Parameter einer Produktion mit aufgezeichnet und in das Statistikmodul überführt. Da Statistiken auf einem PC geführt werden, ist es möglich, diese mit handelsüblichen Programmen weiter zu verarbeiten

Das Inline-Inspektionssystem ist vorzugsweise multilingual ausgeführt, z. B. in den Sprachen Englisch, Französisch, Spanisch, Italienisch und Deutsch. Alle Sprachen können mittels UNICODE integriert werden.

Das Inline-Inspektionssystem detektiert zumindest Druckfehler, die während der Produktion entstehen, wenn der Druckfehler einen Farbmessfehler mit einer Farbabweichung ΔE >= 3 und eine Dichtefehlergenauigkeit ΔD > 0.02 aufweist. Als Inspektionsfehler gelten Farbfehler z. B. durch Über- oder Unterfärbung, Spritzer oder Butzen und Registerfehler mit einer Größe von ca. 0,025 mm². Des Weiteren können Papierfehler, Falten, Papiereinschlüsse, Verschmutzung oder Öl erkannt werden. Da 100 % des Bogens kontrolliert werden, können auch Fehler, die in vorherigen Prozessen entstanden sein könnten, detektiert werden. Das Inline-Inspektionssystem kann jede Bogengröße mit einer Kantenlänge z. B. bis zu 740 mm x 1050 mm inspizieren.

Verschiedene Fehlertypen wie Flächenfehler, Peak-Fehler, Überfärbung, Unterfärbung oder Farbfehler können auf dem Fehlermonitor durch unterschiedliche Symbole angezeigt werden.

Toleranzwerte der einzelnen Bearbeitungsbereiche eines Referenzbildes können numerisch angezeigt werden und, falls erforderlich, geändert werden. Die Mindestanzahl der Bildpunkte, die für eine Fehlerfläche außerhalb des Toleranzbereiches als Fehler auftreten, kann eingegeben werden.

Im Folgenden wird auf das Bedienkonzept des Inline-Inspektionssystems eingegangen. Das Inline-Inspektionssystem soll eine einfache und schnelle Bedienung erlauben, die dem Drucker bei geringem Schulungsaufwand einen großen Nutzen bringt. Er muss frühzeitig auf eine sich aufbauende Abweichung hingewiesen werden, bevor Makulatur erzeugt wird.

Die Bedienung existiert als eine Task auf dem Maschinenleitstand, die sich in das übergeordnete Bedienkonzept der Maschine einfügt. Für die Betrachtung eines aktuellen Fehlerbildes steht ein zusätzlicher Monitor zur Verfügung. Bei einer Widerdruckmaschine ist das Bild umschaltbar. Die über den Inspektionsbetrieb hinausgehenden Funktionen, wie z. B. für das Einrichten eines Auftrags oder eine Erstellung von Masken, sind z. B. über entsprechende Einsprungpunkte in der existierenden, im Maschinenleitstand implementierten Bediensoftware der Maschine erreichbar.

Die Bildaufnahme erfolgt vorzugsweise, während sich der zu inspizierende Bogen auf einem Druckzylinder der Druckmaschine befindet. Die Bildaufnahme ist hier sehr stabil. Je nach Material, z. B. bei sehr dünnem Papier, kann es jedoch zu einer Faltenbildung oder z. B. bei einem biegesteifen Karton zu einem Ablösen des Bogenendes auf der Mantelfläche des Druckzylinders kommen. Die Bildaufnahme ist beim Einbau mechanisch zu kalibrieren, sodass bekannte mechanische Randbedingungen direkt in die Pixeldimension der Bildaufnahme umzusetzen sind.

Ein Datenfluss zum oder vom Maschinenleitstand sieht vor, dass ein Auftragsname, eine Loadnummer oder der Durchgang direkt vom Maschinenleitstand übernommen werden, um für die Jobverwaltung des Inline-Inspektionssystems genutzt zu werden. Aus den Bogenabmessungen kann das übergeordnete Inspektionsfenster generiert werden. Das manuell betätigte Gutbogensignal an der Maschine kann für die Aktivierung der Inspektion und auch für die statistische Auswertung genutzt werden. Ein von dem Inline-Inspektionssystem "generierter Gutbogenzähler" kann gegebenenfalls der Maschinenleitstandsstatistik zugeführt werden.

Aus einem Datenfluss zum oder vom Kunden kann z. B. eine Nutzenaufteilung z. B. über ein DDDES-, CFF- bzw. CF2-File eingelesen werden, um die Eingabearbeiten vor dem eigentlichen Start des Maschinenlaufs erledigen zu können und den Arbeitsaufwand seitens des Druckers zu minimieren.

In einem Datenfluss zur Druckmaschine sind Signale für die Ansteuerung einer Ausschleusung oder einer Bogenmarkierung zu erzeugen.

Die Akzeptanz des Inline-Inspektionssystems durch den Bediener wird durch eine konsistente Integration in das Gesamtkonzept der Maschinenbedienung und die Beschränkung auf einen minimal nötigen, überschaubaren Funktionsumfang gefördert. Deshalb wird das Look-and-Feel der Bedienung stark an das Aussehen und an die Funktionalität der Maschinenleitstandsoftware angelehnt. Die Bedienschritte zum Einrichten eines Auftrages sind in ihrem Umfang gering gehalten. Beim Fortdruck gibt es einen direkten Zugriff auf Schlüsselfunktionalitäten über Funktionstasten/Hardkeys durch die Leitstand-Bediensoftware.

Das Einrichten eines neuen Auftrags wird durch die Übernahme von möglichst vielen relevanten Daten aus dem Leitstandrechner einfach gehalten. Zu übernehmende Daten wären z. B. ein Auftragsname, eine Jobnummer, eine Loadnummer, ein aus dem Papierformat abgeleiteter Inspektionsrahmen oder eine Nutzenaufteilung, z.B. aus einem CF2-File einer Stanzkontur.

Manuelle Eingaben, die für den Drucker einen Aufwand bedeuten, werden auf die Eingabe des Positionierungsfensters begrenzt. Das Inspektionsfenster kann auch automatisch gesetzt werden, wobei es dann nicht notwendig ist, die Druckmaschine schon zum Einrichten des Jobs anfahren zu müssen. Das Lernen kann dann - bei aktivem Gutbogensignal - automatisch gestartet werden.

Im Fortdruck - wenn jeder Bogen inspiziert wird - steht eine Fehleranzeige durch einen Live-Monitor zur Verfügung. Für Druckmaschinen mit Schön-/Widerdruck ist daher eine Umschaltung des Monitors zwischen Vorder- und Rückseite vorgesehen.

Inspektion und Leitstandsoftware teilen sich einen Bedienmonitor. Im Fortdruck wird die Leitstandsoftware angezeigt; für einen Minimalaufwand bei der Bedienung des Inline-Inspektionssystems stehen Hardkeys oder Funktionstasten in den Leitstandssoftware-Masken zur Verfügung, z. B. für die Funktionen Umschaltung Vorder-/Rückseite, Live/Stop&Go/StopOnError oder "Freeze".

Durch eine Funktionstaste (Soft-Key) kann außerdem die vom Look-and-Feel an die Leitstandsoftware angepasste Inspektions-Bedientask aktiviert werden; hierdurch steht dann die volle Bedienbarkeit des Inline-Inspektionssystems zur Verfügung. In diesem Modus werden bezüglich der Bedienung der Druckmaschine nur die Statusinformationen, die z. B. in einem oberen Statusfenster angezeigt werden, dargestellt.

Einstellungen, die in der Inspektions-Bedienoberfläche über die - analog zur Leitstandsoftware implementierte - Funktionstastenreihe vorzunehmen sind, betreffen z. B. Toleranzen, das Lernen/Zulernen, das Erstellen von Masken, eine Anpassung der Nutzeneinteilung, eine Anpassung des Inspektionsrahmens, eine Re-Definition des Positionierungsfensters oder das Laden oder Betrachten von Bildern.

Der Live-Monitor kann Fehleranzeigen im Farbbereich CMYK oder Sonderfarben durch entsprechende Farbanzeige anzeigen.

Zusätzliche Bedienelemente in der Leitstandsoftware können eine Korrektur eines Nettozählers durch das Inspektionsergebnis, eine Fehlerbogenstatistik oder eine Ampelanzeige der Inspektion im Maschinenstatusfeld vorsehen.

Zur Bedienung des Inline-Inspektionssystems können zwei unterschiedliche Konfigurationen vorgesehen sein, nämlich dass die Bediensoftware QT des Inline-Inspektionssystems auf einem PC läuft und die Leitstandsoftware LS auf einem anderen PC läuft oder dass die Bediensoftware QT und die Leitstandsoftware LS auf demselben PC laufen, wobei im letzteren Fall dann beide Programme als Task laufen und wahlweise z. B. durch Umschalten per Funktionstaste in QT und LS sicht- und bedienbar sind.

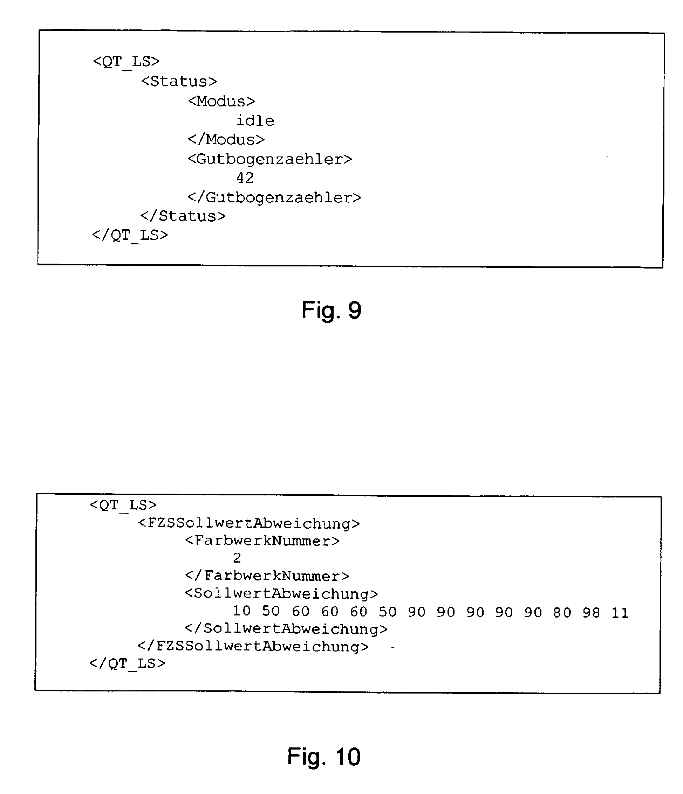

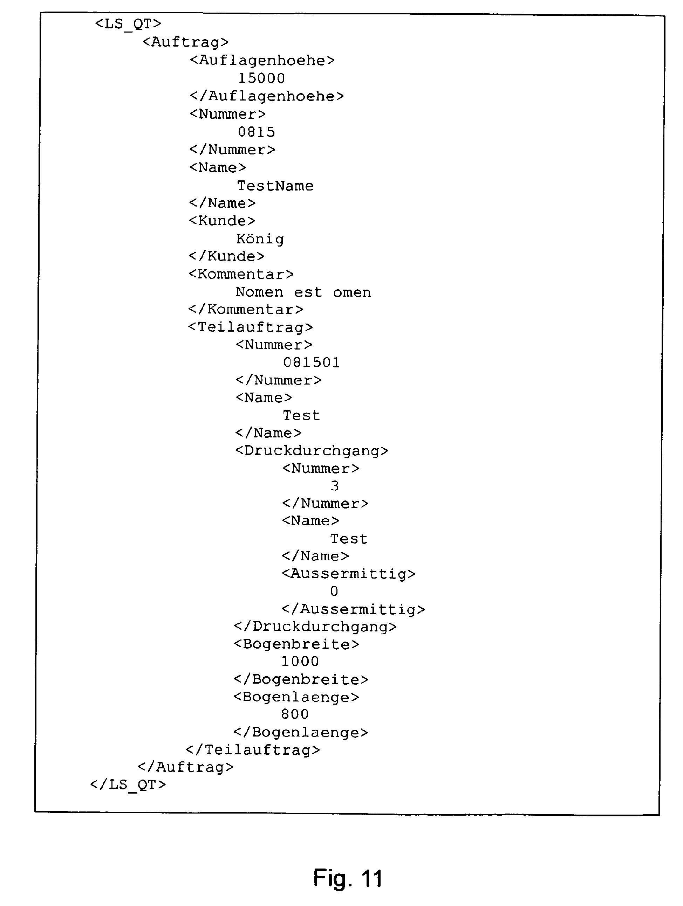

Bei beiden Konfigurationen besteht die Notwendigkeit, Prozessdaten von der Leitstandsoftware LS zur Bediensoftware QT, z. B. Job-Informationen, oder von der Bediensoftware QT zur Leitstandsoftware LS, z. B. Status-Informationen, zu übertragen. Als Schnittstelle zwischen den beiden Systemen wird ein TCP/IP-Stream genutzt; die IP-Adresse der Leitstandsoftware LS ist vom Hersteller der Druckmaschine festgelegt. Befinden sich die Bediensoftware QT und die Leitstandsoftware LS auf demselben PC, findet die Kommunikation über die localhost-Schnittstelle statt. Die Daten werden innerhalb des TCP/IP-Streams z. B. als XML-Elemente übertragen. Die Spezifikation dieser XML-Elemente sind in einer DocumentTypeDefinition-Datei <Kommunikation_LS_QT_update.dtd> spezifiziert. Ein Beispiel für den TCP/IP-Stream beim Senden von Statusdaten von der Bediensoftware QT zur Leitstandsoftware LS zeigt die Fig. 9. Ein Beispiel für den TCP/IP-Stream beim Setzen der Farbzonenschrauben zeigt die Fig. 10. Dieser Kommunikationsweg läuft innerhalb der Druckmaschine ab, und zwar vom Inline-Inspektionssystem über die Leitstandsoftware LS, den ARCNet, die SPS zu den Farbzonenschrauben. Fig. 11 zeigt ein Beispiel für den TCP/IP-Stream beim Senden von Auftragsdaten von der Leitstandsoftware LS zur Bediensoftware QT.

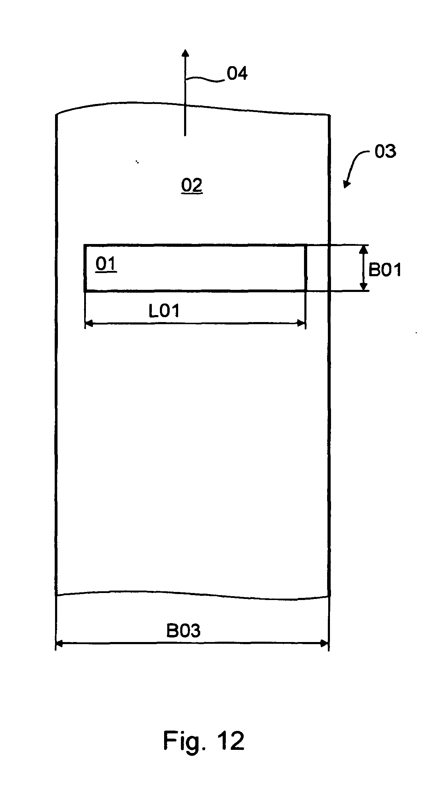

In der zuvor beschriebenen Druckmaschine, vorzugsweise in einer Rotationsdruckmaschine, insbesondere in einer in einem Offsetdruckverfahren druckenden Druckmaschine, wird ein in der Fig. 12 dargestelltes Material 03 mit einer Oberfläche 02 in einer durch einen Pfeil angedeuteten Bewegungsrichtung 04 bewegt. Die Bewegung erfolgt durch eine, z. B. in oder an der Druckmaschine angeordnete, hier nicht dargestellte Transporteinrichtung, wobei die Bewegung des Materials 03 während des Betriebes des nachfolgend noch näher beschriebenen optischen Inline-Inspektionssystems vorzugsweise in nur einer einzigen Bewegungsrichtung 04 erfolgt, und zwar vorzugsweise linear. Das Material 03 ist vorzugsweise ebenflächig und flach, z. B. als ein Bogen 03 oder als eine Materialbahn 03, ausgebildet. Das Material 03 ist insbesondere als ein z. B. aus Papier bestehender Bedruckstoff 03 ausbildet, z. B. auch als ein Wertpapier 03 oder als eine Banknote 03. Die Oberfläche 02 des Materials 03 kann ein Relief oder eine sonstige aus der Oberfläche 02 herausragende oder in die Oberfläche 02 als eine Vertiefung eingeprägte Struktur aufweisen, wobei eine Höhe oder Tiefe des Reliefs bzw. der Struktur im Vergleich zu einer Breite B03 des Materials 03 sehr klein ist. Zumindest ein Teil der Oberfläche 02 des Materials 03 ist z. B. durch Auftragung eines reflektiven Werkstoffs, z. B. eines Lackes, oder einer Folie, durch Einbringung eines Fensterfadens oder einer anderen vorzugsweise metallischen Applikation in das Material 03, reflektiv ausgebildet.

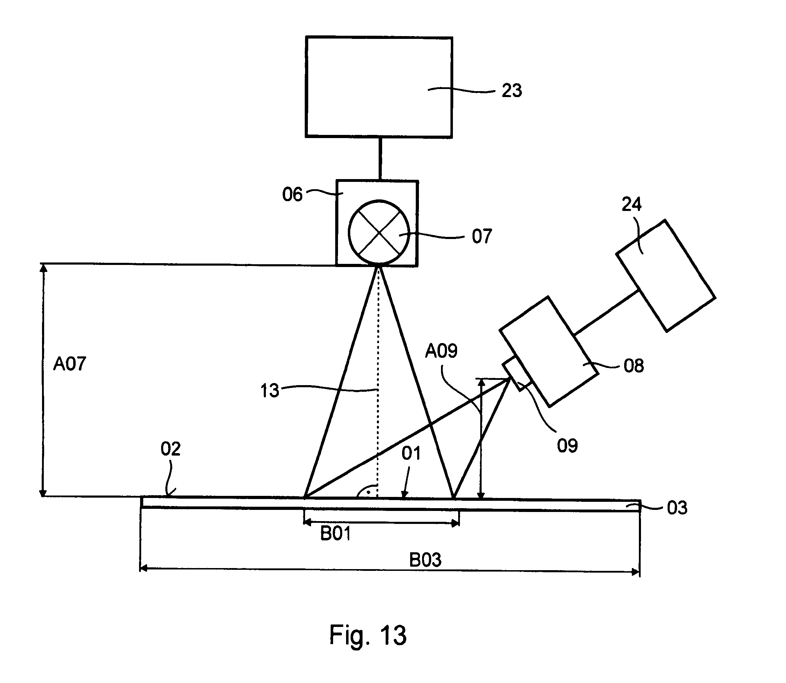

Eine in der Fig. 13 nur symbolhaft dargestellte Beleuchtungseinrichtung 06 erzeugt auf der Oberfläche 02 des Materials 03 ein beleuchtetes Gebilde 01 in Form eines Beleuchtungsstreifens 01 mit einer Länge L01 und einer Breite B01 (Fig. 12), wobei sich die Breite B01 auf der Oberfläche 02 des Materials 03 orthogonal zur Länge L01 erstreckt. Die Breite B01 des Beleuchtungsstreifens 01 ist vorzugsweise längs zur Bewegungsrichtung 04 des Materials 03 gerichtet, wohingegen die Länge L01 des Beleuchtungsstreifens 01 vorzugsweise parallel zur Breite B03 des Materials 03, d. h. quer zur Bewegungsrichtung 04 des Materials 03, gerichtet ist und sich über Teile der Breite B03 des Materials 03 oder über dessen gesamte Breite B03 erstrecken kann. Die Breite B01 des Beleuchtungsstreifens 01 beträgt vorzugsweise mindestens 3 mm, insbesondere 8 mm. Die Bewegungsrichtung 04 des Materials 03 ist somit vorzugsweise zumindest im Wesentlichen parallel zur Breite B01 des Beleuchtungsstreifens 01 gerichtet, wobei die Bewegungsrichtung 04 des Materials 03 innerhalb der von der Länge L01 und der Breite B01 des Beleuchtungsstreifens 01 aufgespannten Ebene liegt. Das Material 03 ist vorzugsweise zumindest im Bereich des Beleuchtungsstreifens 01 nicht gewölbt.

Die Beleuchtungseinrichtung 06 weist mehrere zeilenförmig nebeneinander angeordnete Lichtquellen 07 auf, sodass die gesamte Beleuchtungseinrichtung 06 zeilenförmig ausgebildet ist. Die zeilenförmig angeordneten Lichtquellen 07 der Beleuchtungseinrichtung 06 sind vorzugsweise parallel zur Länge L01 des Beleuchtungsstreifens 01 angeordnet. Die Lichtquellen 07 haben zur Oberfläche 02 des Materials 03 jeweils einen Abstand A07, wobei der Abstand A07 vorzugsweise zwischen 30 mm und 200 mm, insbesondere zwischen 80 mm und 140 mm beträgt. Der Abstand A07 der Lichtquellen 07 steht vorzugsweise jeweils lotrecht auf der Oberfläche 02 des Materials 03. Alle Lichtquellen 07 der Beleuchtungseinrichtung 06 sind vorzugsweise gleichartig ausgebildet, z. B. als helle, lichtestarke Leuchtdioden 07 oder als Laserdioden 07. Eine zentrale Ebene des von den nebeneinander angeordneten Lichtquellen 07 der Beleuchtungseinrichtung 06 emittierten Lichtes und eine zentrale Ebene des vom Beleuchtungsstreifen 01 zur Kamera 08 remittierten Lichtes schließen einen vorzugsweise spitzen Winkel γ miteinander ein, der z. B. im Bereich zwischen 15° und 60°, insbesondere zwischen 20° und 30° liegt (Fig.3).

In der Beleuchtungseinrichtung 06 können auch Gruppen von jeweils mehreren zeilenförmig nebeneinander angeordneten Lichtquellen 07 vorgesehen sein, wobei sich die einzelnen Gruppen von Lichtquellen 07 in ihren optischen Eigenschaften, z. B. in der Wellenlänge des von ihnen emittierten Lichtes unterscheiden. So kann z. B. eine Gruppe von Lichtquellen 07 weißes Licht emittieren, wohingegen eine andere Gruppe von Lichtquellen 07 monochromes Licht emittiert. Es kann vorgesehen sein, dass eine mit der Beleuchtungseinrichtung 06 verbundene Steuereinrichtung 23 die Gruppen von Lichtquellen 07 applikationsabhängig, z. B. in Abhängigkeit von der Beschaffenheit der Oberfläche 02 des Materials 03 nach der Farbe des Lichtes, ausgewählt und einzeln ansteuert. So kann die Steuereinrichtung 23 eine Gruppe von Lichtquellen 07 auch unabhängig von mindestens einer anderen Gruppe von Lichtquellen 07 in ihrer Helligkeit und/oder Leuchtdauer ansteuern. Der Beleuchtungsstreifen 01 ist außerhalb eines im direkten oder im umgelenkten Strahlengang liegenden Brennpunktes des von den Lichtquellen 07 emittierten Lichtes angeordnet.

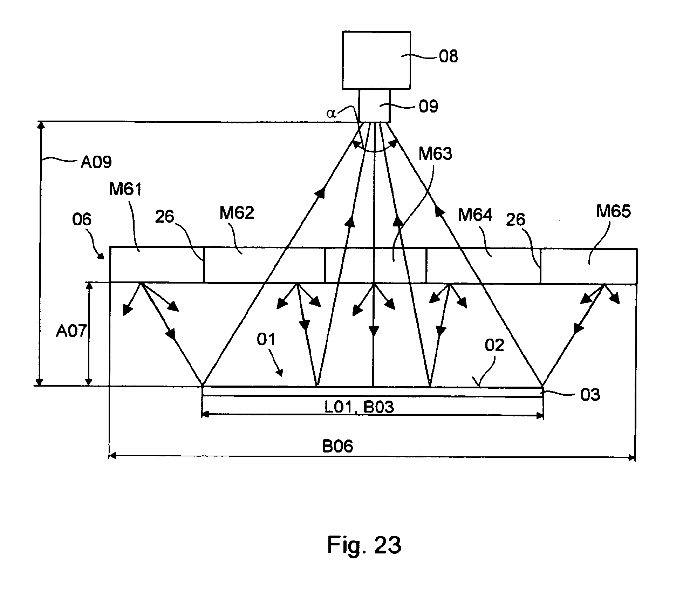

Die Beleuchtungseinrichtung 06 besteht z. B. aus mehreren zeilenförmig aneinander gereihten Modulen M61 bis M65 (Fig. 23) jeweils mit vorzugsweise mehreren zeilenförmig nebeneinander angeordneten Lichtquellen 07, wobei eine Trennfuge 26 zwischen zwei benachbarten Modulen M61 bis M65 vorzugsweise schräg zur Länge L01 des Beleuchtungsstreifens 01 angeordnet ist. Die einzelnen Module M61 bis M65 der Beleuchtungseinrichtung 06 können z. B. funktionsgleich ausgebildet sein. So kann z. B. eine der Breite B03 des zu beleuchtenden Materials 03 entsprechende Zeilenlänge der aus mehreren aneinander gereihten Modulen M61 bis M65 zusammengesetzten Beleuchtungseinrichtung 06 durch ein Einschalten von den zeilenförmig angeordneten Lichtquellen 07 der betroffenen Module M61 bis M65 aktiviert werden oder es kann eine der Länge L01 des Beleuchtungsstreifens 01 entsprechende Zeilenlänge der aus mehreren aneinander gereihten Modulen M61 bis M65 zusammengesetzten Beleuchtungseinrichtung 06 durch ein Einschalten von den zeilenförmig angeordneten Lichtquellen 07 der betroffenen Module M61 bis M65 aktiviert werden.

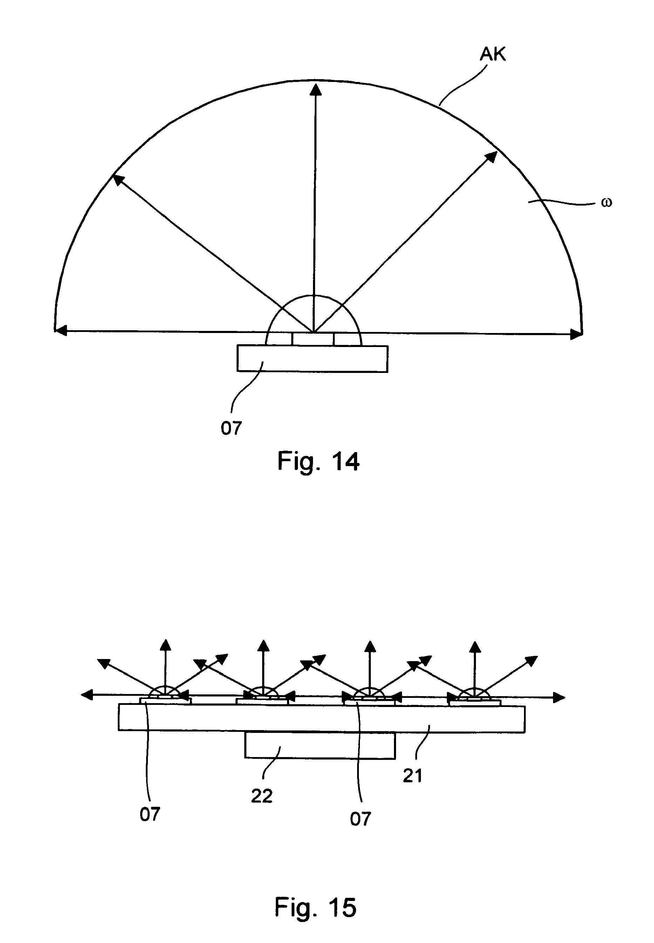

Fig. 14 zeigt in einer nur zweidimensionalen Darstellung eine einzelne Lichtquelle 07 der Beleuchtungseinrichtung 06. Die Lichtquelle 07 emittiert ihr Licht in einen Raumwinkel ω, wobei der Raumwinkel ω eine aus einer Kugel ausgeschnittene Fläche AK, also eine Kugeloberfläche AK, bis zur Größe einer Halbkugel aufspannt.

Fig. 15 zeigt mehrere, z. B. vier der in der Fig. 14 gezeigten Lichtquellen 07 zeilenförmig nebeneinander auf einer gemeinsamen Platine 21 angeordnet. Vorzugsweise ist die zu den jeweiligen Lichtquellen 07 gehörende Stromquelle 22 auf derselben Platine 21 angeordnet. Die Stromquelle 22 ist vorzugsweise als eine Konstantstromquelle 22, insbesondere als eine steuerbare Konstantstromquelle 22, ausgebildet.

Das optische Inline-Inspektionssystem umfasst - wie es der Fig. 13 entnehmbar ist - auch eine Erfassungseinrichtung 08 mit mindestens einem in einem Abstand A09 von der Oberfläche 02 des Materials 03 angeordneten Detektor 09, wobei der Detektor 09 von der Oberfläche 02 des Materials 03 remittiertes Licht erfasst. Der Abstand A09 liegt im Bereich zwischen 10 mm und 1.500 mm, vorzugsweise zwischen 50 mm und 400 mm.

Die Erfassungseinrichtung 08 ist z. B. als eine Kamera 08, vorzugsweise eine Zeilenkamera 08, insbesondere eine Farbzeilenkamera 08, ausgebildet. Auch die Erfassungseinrichtung 08 kann zeilenförmig mehrere nebeneinander angeordnete Detektoren 09 aufweisen, wobei die zeilenförmig angeordneten Detektoren 09 vorzugsweise parallel zur Länge L01 des Beleuchtungsstreifens 01 angeordnet sind. Der Detektor 09 der Erfassungseinrichtung 08 kann z. B. als ein CCD-Array 09 oder als eine Gruppe von Photodioden 09 ausgebildet sein. Der Detektor 09 der Erfassungseinrichtung 08 wandelt das erfasste remittierte Licht in ein elektrisches Signal um und führt das elektrische Signal zu seiner Auswertung einer mit der Erfassungseinrichtung 08 verbundenen Bildverarbeitungseinrichtung 24 zu.

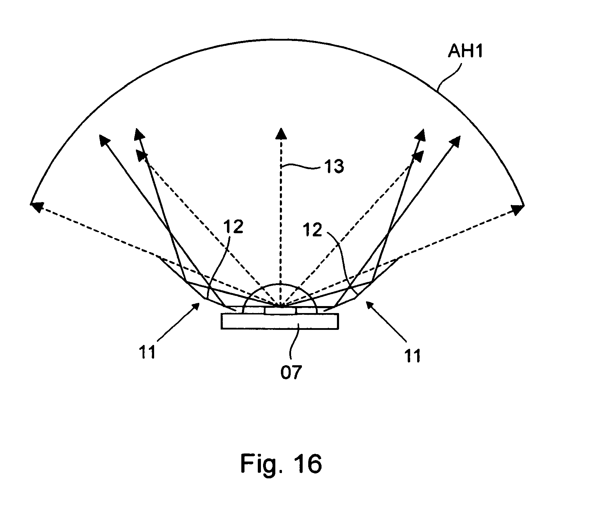

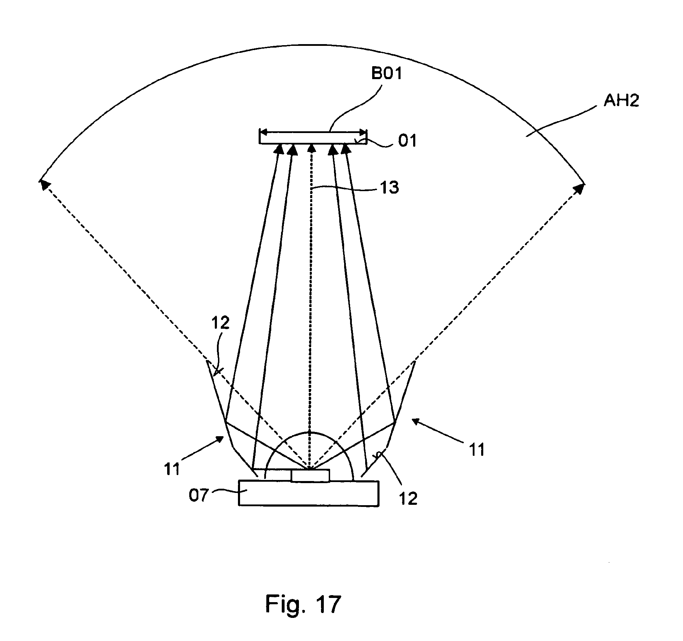

Fig. 16 zeigt, dass in dem optischen Inspektionssystem den Lichtquellen 07 der Beleuchtungseinrichtung 06 mindestens ein erster Spiegel 11 mit mindestens einer längs zur Länge L01 und/oder zur Breite B01 des Beleuchtungsstreifens 01 gerichteten Wirkfläche 12 zugeordnet ist, wobei die Wirkfläche 12 des ersten Spiegels 11 das in den Raumwinkel ω emittierte Licht von mindestens einer der Lichtquellen 07 der Beleuchtungseinrichtung 06 auf eine kleinere erste Hüllfläche AH1 als die zu dem Raumwinkel ω gehörende Kugelfläche AK einschränkt. Die Wirkfläche 12 des ersten Spiegels 11 kann plan oder konkav ausgebildet sein. Dabei kann die mindestens eine längs zur Länge L01 des Beleuchtungsstreifens 01 gerichtete Wirkfläche 12 des ersten Spiegels 11 das in den Raumwinkel ω emittierte Licht von mindestens einer der Lichtquellen 07 der Beleuchtungseinrichtung 06 stärker auf eine kleinere zweite Hüllfläche AH2 einschränken als die mindestens eine längs zur Breite B01 des Beleuchtungsstreifens 01 gerichtete Wirkfläche 12 dieses ersten Spiegels 11, wie es die Fig. 17 im Vergleich zur Strahlenbündelung gemäß der Fig. 16 zeigt. Vorzugsweise weist mindestens eine Lichtquelle 07 der Beleuchtungseinrichtung 06 einen ersten Spiegel 11 mit mindestens zwei zu einem von der Lichtquelle 07 emittierten Zentralstrahl 13 symmetrischen Wirkflächen 12 auf.

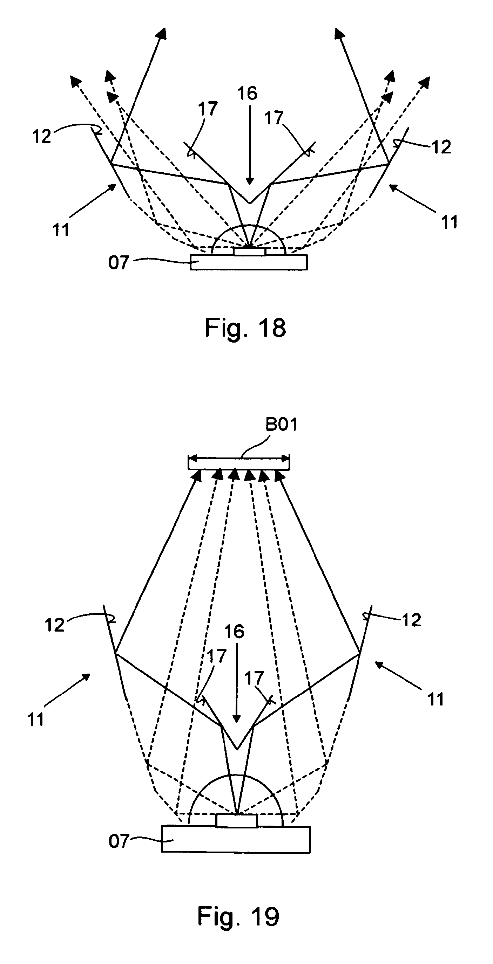

Zur Umlenkung der von mindestens einer der Lichtquellen 07 der Beleuchtungseinrichtung 06 in einem den Zentralstrahl 13 umgebenden zentralen Bereich 14 emittierten Strahlung kann, wie in den Fig. 18 und 19 dargestellt, z. B. ein zweiter Spiegel 16 vorgesehen sein, wobei dessen mindestens eine Wirkfläche 17 in dem den Strahlengang des Zentralstrahls 13 umgebenden zentralen Bereich 14 innerhalb des Raumwinkels ω des von der Lichtquelle 07 emittierten Lichtes angeordnet ist, wobei die Wirkfläche 17 des zweiten Spiegels 16 das von mindestens einer der Lichtquellen 07 der Beleuchtungseinrichtung 06 emittierte Licht gegen mindestens eine längs zur Länge L01 und/oder zur Breite B01 des Beleuchtungsstreifens 01 gerichtete Wirkfläche 12 des ersten Spiegels 11 umlenkt. Dabei kann die von der Lichtquelle 07 emittierte Strahlung vorzugsweise längs zur Länge L01 des Beleuchtungsstreifens 01 stärker gebündelt werden als die Strahlung längs zu dessen Breite B01. Auch die Wirkfläche 17 des zweiten Spiegels 16 kann plan oder konkav ausgebildet sein. Die dem zentralen Bereich 14 zuzuordnende, von den jeweiligen Lichtquellen 07 emittierte Strahlung ist in den Fig. 18 bis 21 jeweils mit durchgängigen Pfeillinien angedeutet, wohingegen von den Lichtquellen 07 in ihrem jeweiligen Raumwinkel ω peripher emittierte Strahlung mit gestrichelten Pfeillinien angedeutet ist.

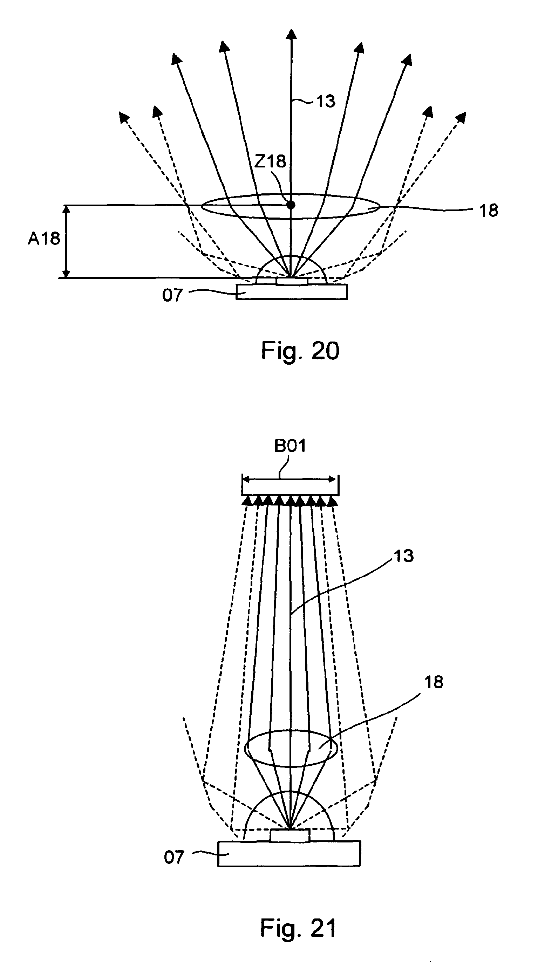

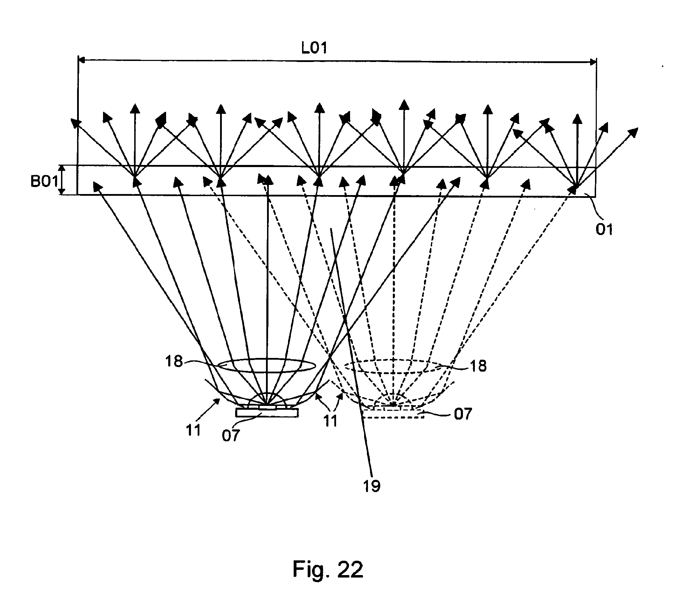

Alternativ kann gleichfalls zur Umlenkung der von mindestens einer der Lichtquellen 07 der Beleuchtungseinrichtung 06 in einem den Zentralstrahl 13 umgebenden zentralen Bereich 14 emittierten Strahlung gemäß den Fig. 20 und 21 mindestens eine Linse 18, insbesondere eine bikonvexe Linse 18, in dem den Strahlengang des Zentralstrahls 13 umgebenden zentralen Bereich 14 innerhalb des Raumwinkels ω des von mindestens einer der Lichtquellen 07 der Beleuchtungseinrichtung 06 emittierten Lichtes angeordnet sein, wobei zwischen der Lichtquelle 07 und einem Zentrum Z18 der Linse 18 ein Abstand A18 besteht, wobei der Abstand A18 vorzugsweise geringer als die Hälfte des Abstandes A07 zwischen der Lichtquelle 07 und der Oberfläche 02 des Materials 03 ist. Dabei kann die Linse 18 nicht rotationssymmetrisch ausgebildet sein, um die von der Lichtquelle 07 emittierte Strahlung vorzugsweise längs zur Länge L01 des Beleuchtungsstreifens 01 stärker zu bündeln als längs zu dessen Breite B01.

Die Fig. 22 zeigt, dass die Lichtquellen 07 der Beleuchtungseinrichtung 06 vorzugsweise derart angeordnet sind, dass sich die jeweiligen Raumwinkel ω oder zumindest die Hüllflächen AH1; AH2 des von mindestens zwei benachbarten Lichtquellen 07 der Beleuchtungseinrichtung 06 emittierten Lichtes zumindest in einem den Beleuchtungsstreifen 01 beleuchtenden Teilbereich 19 überlagern. Diese Überlagerung ist insbesondere auch dann vorgesehen, wenn die beteiligten benachbarten Lichtquellen 07 in zwei benachbarten Modulen M61 bis M65 angeordnet sind. Aus der Fig. 22 ist auch ersichtlich, dass an jeder einzelnen Lichtquelle 07 der Beleuchtungseinrichtung 06 jeweils ein erster Spiegel 11 mit mindestens einer Wirkfläche 12, vorzugsweise mit zwei zueinander symmetrischen Wirkflächen 12, zumindest längs zur Breite B01 des Beleuchtungsstreifens 01 vorgesehen sein kann. Des Weiteren kann die Oberfläche 02 des Materials 03 einen Streukörper, d. h. einen Licht streuenden Körper, aufweisen, z. B. ein Lentikular oder eine Prismenfolie, wobei der Streukörper das im Beleuchtungsstreifen 01 auf die Oberfläche 02 des Materials 03 aufgestrahlte Licht vorzugsweise nur oder zumindest ganz überwiegend längs zur Länge L01 des Beleuchtungsstreifens 01 remittiert. Alternativ oder zusätzlich kann ein weiterer Streukörper zu einer weiteren Homogenisierung des von der Beleuchtungseinrichtung 06 abgestrahlten Lichtes an der Lichtaustrittsseite der Beleuchtungseinrichtung 06 angeordnet sein und sich somit im Lichtweg zwischen den Lichtquellen 07 der Beleuchtungseinrichtung 06 und der zu beleuchtenden Oberfläche 02 des Materials 03 befinden. Ein derartiger den Lichtquellen 07 vorgelagerter Streukörper verbessert eine Ausleuchtung der Oberfläche 02 des Materials 03 im Sinne einer möglichst schattenfreien Ausleuchtung, wenn die Oberfläche 02 des Materials 03 ein zumindest leichtes Relief aufweist.

Fig. 23 zeigt eine Ansicht des optischen Inspektionssystems in einer lotrecht zur Bewegungsrichtung 04 des Materials 03 stehenden Ebene. Die Beleuchtungseinrichtung 06 und der auf der Oberfläche 02 des Materials 03 beleuchtete Beleuchtungsstreifen 01 sind im Abstand A07 parallel zueinander angeordnet, jedoch kann eine Erstreckung der Beleuchtungseinrichtung 06, d. h. ihre Länge B06, größer sein als die Länge L01 des Beleuchtungsstreifens 01 oder als die Breite B03 des Materials 03. Die Beleuchtungseinrichtung 06 ist in vorzugsweise mehrere Module M61 bis M65 aufgeteilt, d. h. in diesem Beispiel in fünf zeilenförmig nebeneinander angeordnete Module M61 bis M65, wobei die in jedem Modul M61 bis M65 angeordneten Lichtquellen 07 jeweils Licht zum Beleuchtungsstreifen 01 emittieren. Das vom Beleuchtungsstreifen 01 remittierte Licht wird von dem im Abstand A09 von der Oberfläche 02 des Materials 03 angeordneten Detektor 09 der Erfassungseinrichtung 08 innerhalb eines sich längs zur Länge L01 des Beleuchtungsstreifens 01 öffnenden, räumlichen Erfassungswinkels α erfasst, wobei der Erfassungswinkel α in diesem Beispiel derart bemessen ist, das er das vom Beleuchtungsstreifen 01 remittierte Licht über die gesamte Länge L01 des Beleuchtungsstreifens 01 erfasst. Der Erfassungswinkel α bildet an der Oberfläche 02 des Materials 03 eine Querschnittsfläche aus, sodass der Erfassungswinkel α zumindest einen Teil einer sich über die Breite B01 des Beleuchtungsstreifens 01 erstreckenden Querschnittsfläche des von der Beleuchtungseinrichtung 06 emittierten Lichtestrahlenbündels erfasst. Die vom Erfassungswinkel α erfasste Querschnittsfläche ist vorzugsweise zumindest so groß wie die auf der Oberfläche 02 des Materials 03 durch die Länge L01 und Breite B01 des Beleuchtungsstreifens 01 aufgespannte Fläche.

Die Qualität eines mit der Erfassungseinrichtung 08 durch Erfassung des vom Beleuchtungsstreifen 01 remittierten Lichtes aufgenommenen Bildes ist maßgeblich davon abhängig, dass die Lichtquellen 07 der Beleuchtungseinrichtung 06 Licht konstanter Lichtstärke emittieren. Denn Schwankungen in der Lichtstärke des von den Lichtquellen 07 emittierten Lichtes führen in der Erfassungseinrichtung 08 bezüglich des der Bildverarbeitungseinrichtung 24 zugeführten Signals zu demselben Ergebnis wie Änderungen in der Beschaffenheit der Oberfläche 02 des angestrahlten Materials 03, sodass in der Bildverarbeitungseinrichtung 24 die Ursachen einer Signaländerung nicht unterschieden werden können. Unter diesen Umständen lassen sich aus einer in der Bildverarbeitungseinrichtung 24 vorgenommenen Bildauswertung keine verlässlichen Aussagen über die Beschaffenheit der Oberfläche 02 des angestrahlten Materials 03 gewinnen.

Abhilfe bieten hier Maßnahmen, die die Lichtstärke des von den Lichtquellen 07 der Beleuchtungseinrichtung 06 emittierten Lichtes konstant halten. Die in der Beleuchtungseinrichtung 06 verwendeten Lichtquellen 07 sind vorzugsweise als lichtstarke Leuchtdioden 07 oder Laserdioden 07 ausgebildet, deren Lichtstärke temperaturabhängig ist. Im Folgenden werden zur Erzielung einer konstanten Lichtstärke Maßnahmen zur Temperaturstabilisierung der auf dem Träger 21 angeordneten Lichtquellen 07 beschrieben. Der Vorteil dieser Lösung besteht darin, dass die thermische Last der Lichtquellen 07 direkt am Entstehungsort abgeführt wird, wodurch sich kurze Regelzeiten erreichen lassen.

Die Lichtquellen 07 sind vorzugsweise auf einer mit weiteren elektronischen Bauelementen bestückbaren und mit Leiterbahnen versehenen Platine 21 angeordnet. Der Halbleiter der Leuchtdioden 07 oder Laserdioden 07 steht vorzugsweise in direktem Berührungskontakt mit der Platine 21, die z. B. als MCPCB (metal core printed circuit board) oder als eine Platine 21 mit einem Kern aus Aluminium ausgebildet ist und an ihrer die Leuchtdioden 07 oder Laserdioden 07 tragenden Montageseite 32 zur Ausbildung eines möglichst geringen Wärmeübergangswiderstandes nur eine sehr dünne Auflage auf ihrem wärmeleitenden Untergrund aufweist.

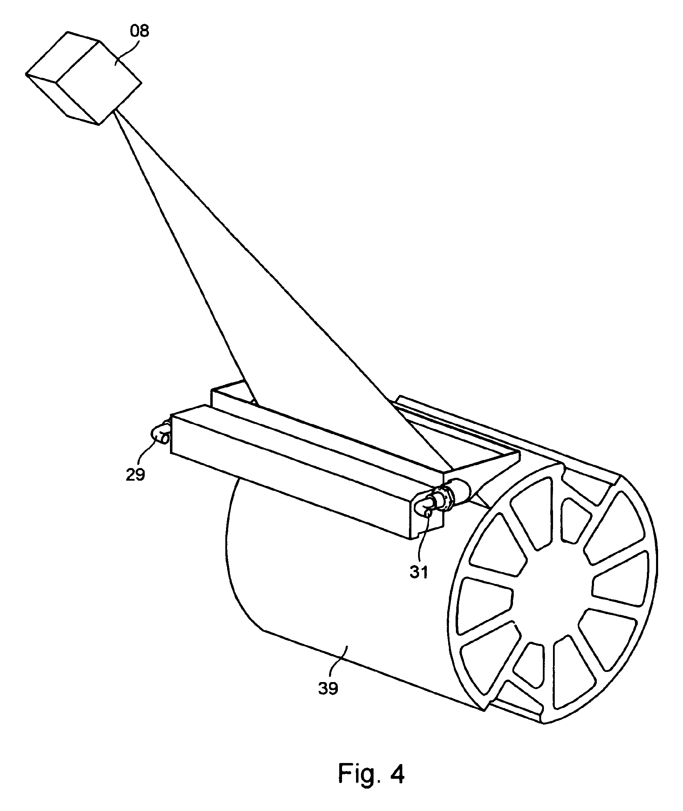

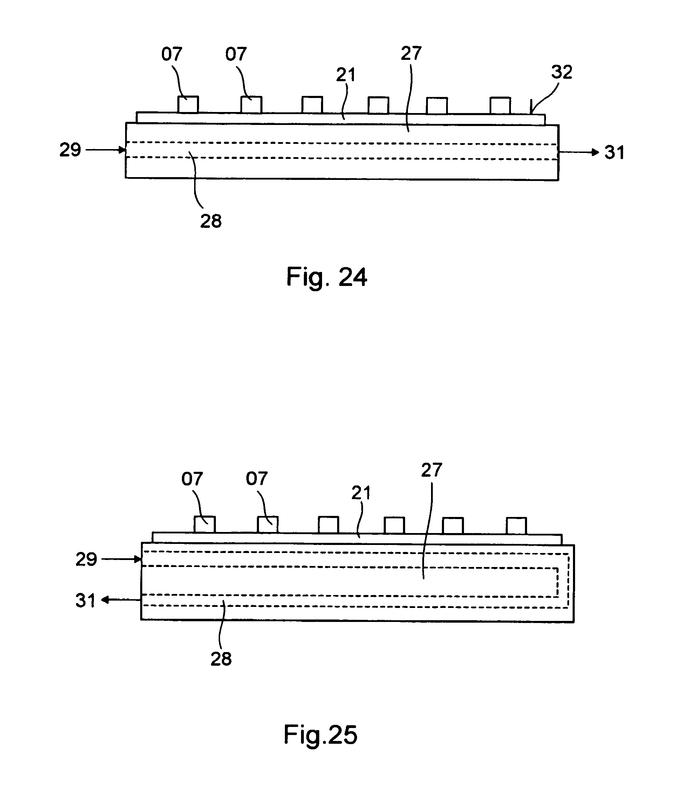

Fig. 24 zeigt eine Platine 21 mit mehreren darauf zeilenförmig angeordneten Lichtquellen 07, wobei die Platine 21 ihrerseits auf einem Träger 27 aus einem wärmeleitfähigen Werkstoff angeordnet ist, wobei der Träger 27 vorzugsweise in seinem Inneren vorzugsweise unterhalb der zeilenförmigen Anordnung der Lichtquellen 07, d. h. in möglichst guter Wärmekopplung zu den Lichtquellen 07, mindestens einen Kanal 28 aufweist, wobei ein flüssiges oder gasförmiges Kühlmedium, z. B. Wasser oder Luft, den Kanal 28 durchströmt. Vorzugsweise stirnseitig am Träger 27 sind zur Zuführung und Abführung des Kühlmediums eine mit einem Vorlauf verbundene Öffnung 29 und eine mit einem Rücklauf verbundene Öffnung 31 vorgesehen, wobei das Kühlmedium den Träger 27 z. B. geradlinig durchströmt (Fig. 4). Fig. 25 zeigt einen Träger 27, den das Kühlmedium in zwei einander entgegengesetzten Richtungen durchströmt, wodurch im Träger 27 ein entlang der zeilenförmigen Anordnung der Lichtquellen 07 ausgeglichenes Temperaturprofil erreicht wird. Dazu kann der Kanal 28 an einem Ende des Trägers 27 um 180° umgelenkt sein.

Eine nicht dargestellte Regeleinrichtung kann die Temperatur des Kühlmediums am Vorlauf und die durch den Kanal 28 strömende Durchflussmenge konstant halten. Alternativ kann die Regeleinrichtung auch eine Differenz zwischen der Temperatur des Kühlmediums am Vorlauf und der Temperatur des Kühlmediums am Rücklauf konstant halten. Dabei ist weniger die absolute Temperatur des Kühlmediums von Bedeutung, sondern vielmehr, dass eine für die Lichtquellen 07 maximal zulässige Temperatur, die sich aus den Wärmeübergangswiderständen der beteiligten Werkstoffe ergibt, nicht überschritten wird, was von der Regeleinrichtung durch eine Überwachung der Temperatur des Kühlmediums und einen darauf reagierenden Regelungseingriff verhindert wird. Wenn ein in seiner Temperatur oder Durchflussmenge regelbares Kühlmedium zur Kühlung der Lichtquellen 07 nicht ausreicht, kann die Kühlung der Lichtquellen 07 durch ein externes, nicht mit der Platine 21 verbundenes Kühlgerät (nicht dargestellt) unterstützt werden.

Es ist vorteilhaft, als Kühlmedium ein in der Druckmaschine bereits vorhandenes Kühlmedium zu verwenden, z. B. das Kühlmedium, das mindestens eine in einem Kühlwalzenständer angeordnete Kühlwalze und/oder mindestens eine in einem Farbwerk angeordnete Farbtemperierwalze und/oder mindestens eine in einem Feuchtwerk angeordnete Feuchtwerkswalze durchströmt. Beispielsweise ist ein vorzugsweise mehrere Kühlwalzen aufweisender Kühlwalzenständer bei einer im Akzidenzdruck arbeitenden Rollendruckmaschine in Bahnlaufrichtung hinter einem der Druckeinheit nachgeordneten Trockner, insbesondere einem Heißluft- oder Infrarottrockner, angeordnet, wobei die bei ihrem Durchlauf durch den Trockner z. B. auf 130°C erwärmte Materialbahn durch ihren Kontakt mit der Mantelfläche der Kühlwalzen vorzugsweise auf Raumtemperatur abgekühlt wird. Die Materialbahn umschlingt jede der Kühlwalzen jeweils mit einem möglichst großen Umschlingungswinkel. Eine in einem Farbwerk angeordnete Farbtemperierwalze dient u. a. dem Zweck, rheologische Eigenschaften der dieses Farbwerk durchlaufenden Druckfarbe hinsichtlich ihrer guten Verdruckbarkeit zu beeinflussen, da rheologische Eigenschaften der Druckfarbe temperaturabhängig sind und mithin durch eine z. B. als Farbtemperierwalze ausgebildete Temperiereinrichtung steuerbar oder regelbar sind. Eine Beeinflussung der rheologischen Eigenschaften der Druckfarbe hat ihrerseits Auswirkungen auf die Qualität des in der Druckmaschine herzustellenden Druckerzeugnisses. Sowohl für eine Kühlwalze als auch für eine Farbtemperierwalze oder Feuchtwerkswalze kommt vorzugsweise ein flüssiges Kühlmedium, z. B. Wasser oder Öl zum Einsatz, jeweils gegebenenfalls mit Additiven wie z. B. Alkoholbeimischungen. In jedem Fall sollte das Kühlmedium eine gute Wärmekapazität aufweisen. Es ist vorteilhaft, einen zur Kühlung einer Kühlwalze und/oder einer Farbtemperierwalze und/oder einer Feuchtwerkswalze und/oder eines Druckwerkzylinders, z. B. Formzylinders vorhandenen Kreislauf des dafür verwendeten Kühlmediums zu erweitern und gleichzeitig auch zur Kühlung der Lichtquellen 07 der Beleuchtungseinrichtung 06 zu verwenden. Auch ist es vorteilhaft, wenn die an der Beleuchtungseinrichtung 06 ausgebildete Öffnung 29 zur Zuführung des Kühlmediums und die an der Beleuchtungseinrichtung 06 ausgebildete Öffnung 31 zur Abführung des Kühlmediums jeweils an derselben Stirnseite der Beleuchtungseinrichtung 06 vorgesehen sind, weil dadurch die für den Transport des Kühlmittels erforderliche Leitungsverlegung, insbesondere innerhalb der Druckmaschine, vereinfacht wird. Das Kühlmedium durchströmt die Beleuchtungseinrichtung 06 vorzugsweise vollständig, zumindest aber innerhalb der Module M61 bis M65 mit mindestens einer aktivierten Lichtquelle 07. Mit der Durchströmung der Beleuchtungseinrichtung 06 mit einem flüssigen Kühlmedium lässt sich für die in der Beleuchtungseinrichtung 06 angeordneten Lichtquellen 07 eine Temperaturstabilität von z. B. ± 1 °C erreichen, insbesondere wenn das Kühlmedium von einer entsprechenden Regeleinrichtung überwacht wird.

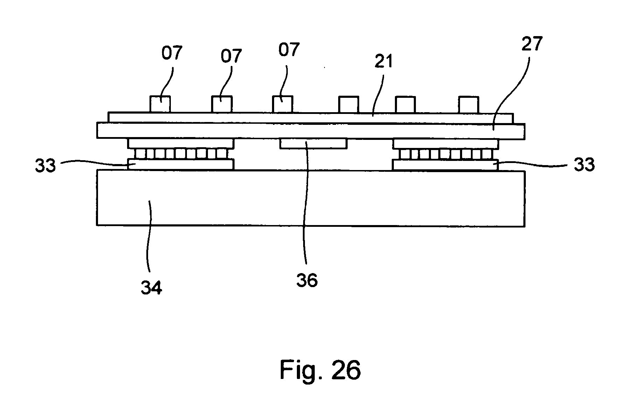

Eine Ergänzung der Kühlung mit einem strömenden Kühlmedium oder eine Alternative zur Verwendung eines strömenden Kühlmediums zeigt die Fig. 26. Die mit den Lichtquellen 07 bestückte Platine 21 ist auf einem Träger 27 aus einem wärmeleitfähigen Werkstoff angeordnet, wobei der Träger 27 seinerseits auf mindestens einem Peltierelement 33, vorzugsweise aber mehreren Peltierelementen 33, angeordnet ist, wobei die Peltierelemente 33 vorzugsweise jeweils mit einem vom Träger 27 thermisch getrennten Kühlkörper 34 verbunden sind. Eine notwendige Temperaturmessung zur Regelung des mindestens einen Peltierelements 33 durch eine nicht dargestellte elektronische Regeleinrichtung wird vorzugsweise direkt an dem Träger 27 durch einen an diesem angebrachten Temperatursensor 36 vorgenommen. Bei schwankender Umgebungstemperatur schwankt dann nur die Temperatur des Kühlkörpers 34, nicht aber die Temperatur der auf der Platine 21 angeordneten Lichtquellen 07. Die elektronische Regeleinrichtung kann in der mit der Beleuchtungseinrichtung 06 verbundenen Steuereinrichtung 23 integriert sein.

Da die Bewegung des bewegten Materials 03 in einer Druckmaschine oder einer ein Druckerzeugnis weiter verarbeitenden Maschine mit einer Geschwindigkeit von mehreren Metern pro Sekunde erfolgt, z. B. 3 m/s oder mehr, wobei z. B. in einer Bogendruckmaschine 18.000 oder auch mehr Bogen 03 pro Stunde bedruckt und durch die Druckmaschine transportiert werden, ist das optische Inspektionssystem derart auszulegen, dass von dem bewegten Material 03 eine brauchbare Bildaufnahme möglich ist. Dabei ist zu beachten, dass sich bei einer als eine Zeilenkamera 08 ausgebildeten Erfassungseinrichtung 08 die erfasste Menge des von der Oberfläche 02 des bewegten Materials 03 remittierten Lichtes in Abhängigkeit von der Geschwindigkeit des bewegten Materials 03 ändert. Dadurch ändert sich auch die Helligkeit der Bildaufnahme. Bei größeren Geschwindigkeitsänderungen, wie sie in den genannten Maschinen üblicherweise auftreten, kann die Bildaufnahme unbrauchbar werden.

Statt die Bildaufnahme der Zeilenkamera 08 mit einem Encoder mit der Geschwindigkeit des bewegten Materials 03 zu synchronisieren, wird vorgeschlagen, eine Einschaltdauer t3 einer einzelnen Lichtquelle 07 oder einer Gruppe von Lichtquellen 07 der Beleuchtungseinrichtung 06, die von einer von der Steuereinrichtung 23 gesteuerten Stromquelle 22, insbesondere einer Konstantstromquelle 22, angesteuert werden, mit einer Triggerung, d. h. einer Belichtungsdauer t1 der Zeilenkamera 08 zu synchronisieren, sodass die Oberfläche 02 des bewegten Materials 03 unabhängig von der Geschwindigkeit des bewegten Materials 03 immer mit der gleichen Lichtmenge beleuchtet wird. Dadurch ergibt sich eine konstante Helligkeit für das von der Zeilenkamera 08 aufgenommene Bild über einen weiten Bereich der Geschwindigkeit des bewegten Materials 03.

Vorzugsweise sind - wie bereits beschrieben - in der Beleuchtungseinrichtung 06 mehrere Gruppen von Lichtquellen 07 vorgesehen, denen jeweils mindestens eine Stromquelle 22, insbesondere eine Konstantstromquelle 22, zugeordnet ist. Die Einschaltzeiten t3 der Lichtquellen 07 werden von der mit der Beleuchtungseinrichtung 06 verbundenen Steuereinrichtung 23 z. B. gruppenweise oder auch einzeln unabhängig voneinander von den jeweiligen Stromquellen 22 angesteuert, sodass sich über die Länge der vorzugsweise zeilenförmig angeordneten Lichtquellen 07 der Beleuchtungseinrichtung 06 ein Lichtmengenprofil einstellen lässt. Die Einstellung eines Lichtmengenprofils vorzugsweise längs zur Länge L01 des Beleuchtungsstreifens 01 hat den Vorteil, dass Transmissionsverluste durch eine nicht dargestellte Optik der Zeilenkamera 08 ausgeglichen werden können.

Darüber hinaus kann vorgesehen sein, dass ein z. B. mit der Steuereinrichtung 23 verbundener Lichtsensor die abgestrahlte Lichtmenge der Lichtquellen 07 der Beleuchtungseinrichtung 06 misst, um anhand des Messsignals des Lichtsensors die Einschaltdauer t3 der von den Stromquellen 22 mit der Steuereinrichtung 23 gesteuerten Lichtquellen 07 z. B. an ein Degradationsverhalten der Lichtquellen 07 anzupassen und mit der Ansteuerung der Lichtquellen 07 z. B. eine mit ihrer Alterung nachlassende Abstrahlung in ihrer Lichtmenge zu kompensieren. Auch kann die Steuereinrichtung 23 die Einschaltdauer t3 der Lichtquellen 07 an unterschiedliche optische Eigenschaften des zu beleuchtenden Materials 03 automatisch anpassen.

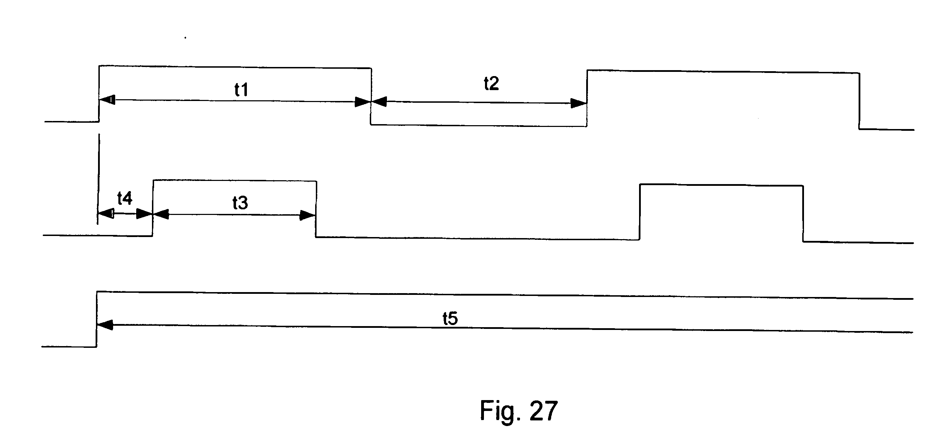

Fig. 27 zeigt das Zeitverhalten der Zeilenkamera 08 und das der Lichtquellen 07. Die Zeilenkamera 08 wird gemäß dem oberen, ersten Zeitverlauf zu einem bestimmten Zeitpunkt eingeschaltet, sodass zu diesem Zeitpunkt die Belichtungsdauer t1 der Zeilenkamera 08 beginnt. Nach Ablauf der Belichtungsdauer t1 folgt unmittelbar eine von der Geschwindigkeit des bewegten Materials 03 abhängige Auszeit t2 zwischen zwei aufeinander folgenden, benachbarten Bildzeilen der Zeilenkamera 08. Zumindest eine in Abhängigkeit von der Steuerung der Zeilenkamera 08 getriggerte Lichtquelle 07 wird gemäß dem mittleren, zweiten Zeitverlauf in der Fig. 27 von der von der Steuereinrichtung 23 gesteuerten Stromquelle 22 gleichzeitig mit der Belichtungsdauer t1 der Zeilenkamera 08 angesteuert, wobei nach einer Verzögerungszeit t4 für die Einschaltung der Lichtquelle 07, d. h. eine physikalisch bedingte Zeit bis zum Beginn ihrer Lichtemission, diese Lichtquelle 07 dann für die Einschaltdauer t3 eingeschaltet bleibt, wobei eine Summe bestehend aus der Verzögerungszeit t4 und der Einschaltdauer t3 vorzugsweise geringer bemessen ist als die Belichtungsdauer t1 der Zeilenkamera 08. Das Zeitverhalten für die Zeilenkamera 08 und die Lichtquellen 07 wiederholt sich periodisch in der zuvor beschriebenen festen Korrelation. Nur als Vergleich zu der in ihrer Einschaltdauer t3 getriggerten Lichtquelle 07 ist in dem unteren, dritten Zeitverlauf der Fig. 27 das Zeitverhalten der Einschaltdauer t5 für eine Konstantlichtquelle dargestellt.

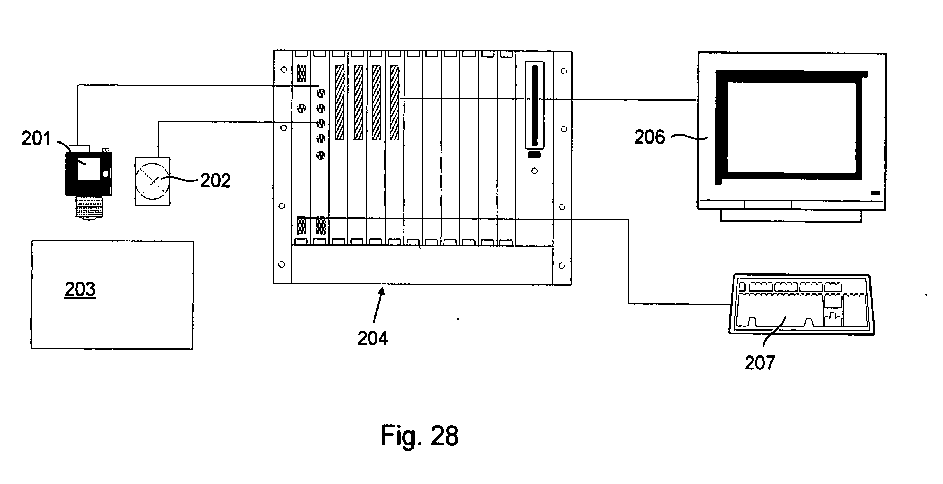

In einer weiteren Ausführung kann das für die Druckbildkontrolle geeignete Inspektionssystem gemäß seiner schematischen Darstellung in der Fig. 28 eine oder mehrere miteinander gekoppelte Farbzeilenkameras 201 oder eine Farbflächenkamera 201 aufweisen, die ein von einer Beleuchtungseinrichtung 202 beleuchtetes Druckbild 203 aufnimmt, wobei das Druckbild 203 mit der Druckmaschine auf einem z. B. aus Papier bestehendem Bedruckstoff erzeugt worden ist. Von der Farbzeilenkamera 201 oder der Farbflächenkamera 201 aus der Aufnahme des Druckbildes ermittelte Amplitudenwerte Axy2 der einzelnen Farbkanäle werden in einem Bildverarbeitungssystem 204 verrechnet. Die Ausgabe des Ergebnisses erfolgt z. B. auf einem mit dem Bildverarbeitungssystem 204 verbundenen Monitor 206. Eingaben, z. B. dem Bildverarbeitungssystem 204 für seine Berechnungen notwendigerweise mitzuteilende Parameter, werden über eine an das Bildverarbeitungssystem 204 angeschlossene Tastatur 207 eingegeben.

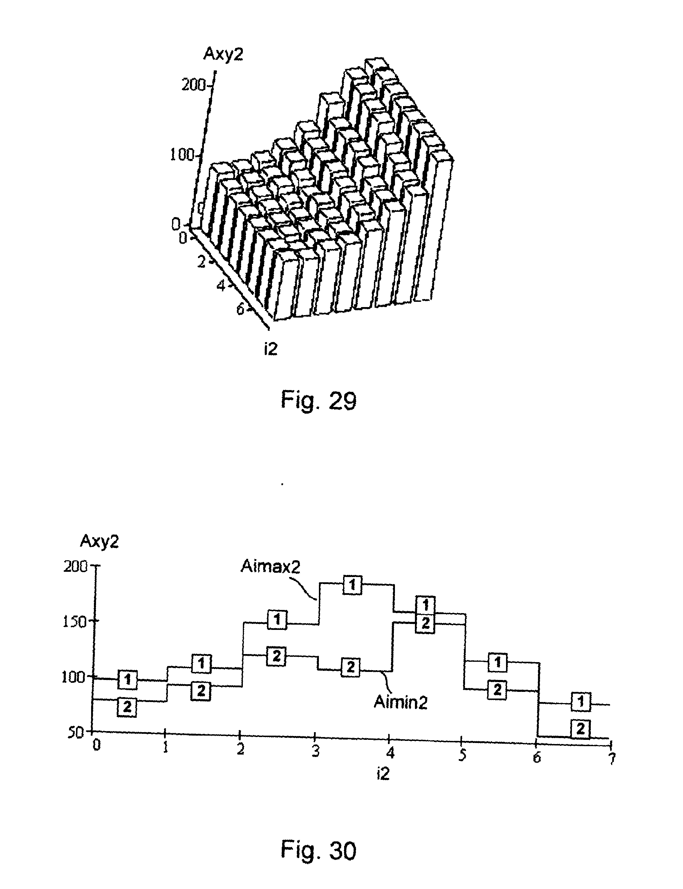

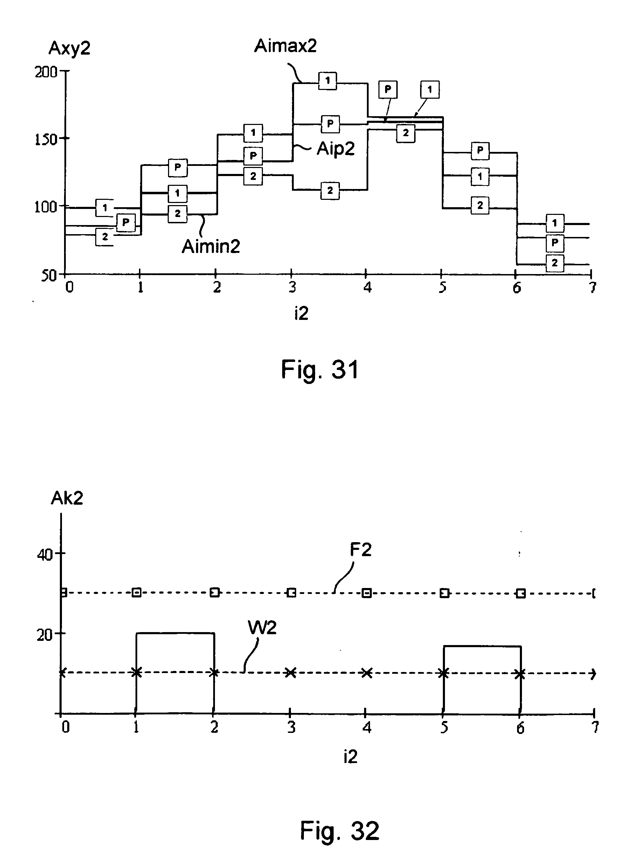

In einer Lernphase während einer als gut klassifizierten Produktion werden die Amplitudenwerte Axy2 der Farbzeilenkamera 201 oder der Farbflächenkamera 201 von dem Bildverarbeitungssystem 204 zu einem Referenzbild verrechnet. Fig. 29 zeigt eine zweidimensionale Darstellung eines aus der Aufnahme des Druckbildes resultierenden, beispielsweise quadratischen Pixelfeldes, wobei das Pixelfeld in seiner Grundfläche z. B. aus 8x8 Pixeln besteht und die Amplitudenwerte Axy2 des Pixelfeldes auf dessen Hochachse aufgetragen sind. Aus Gründen der Übersichtlichkeit werden die folgenden, aus dem Pixelfeld entnommenen oder abgeleiteten Daten nur für einen eindimensionalen Bereich von einer einzigen Zeile mit z. B. acht Pixeln i2 mit i2 = 0 bis 7 dargestellt. Fig. 30 zeigt ein vorzugsweise aus mehreren Aufnahmen generiertes Referenzbild mit den jeweiligen Maximalwerten Aimax2 und Minimalwerten Aimin2 für jedes Pixel i2. Anschließend werden die Amplitudenwerte Aip2 des aktuell aufgenommenen Druckbildes mit diesem aus dem Verlauf der jeweiligen Maximalwerte Aimax2 und Minimalwerte Aimin2 bestehenden Referenzbild verglichen und die Abweichungen ermittelt, wie es die Fig. 31 aufzeigt.

In dem Vergleich der Amplitudenwerte Aip2 des aktuell aufgenommenen Druckbildes mit seinem Referenzbild wird für jede Abweichung der Kontrast AK2 zum Referenzbild bewertet. Die Bewertung erfolgt über zwei getrennt einzustellende Entscheidungsschwellen W2 und F2, wobei eine Entscheidungsschwelle eine Warnungsschwelle W2 und die andere Entscheidungsschwelle eine Fehlerschwelle F2 bilden (Fig. 32). Sobald der Kontrast AK2 zum Referenzbild für ein oder mehrere Pixel i2 oberhalb der Warnschwelle W2, aber noch unterhalb der Fehlerschwelle F2 liegt, wird für diesen Bildbereich eine Warnung ausgegeben. Sobald für ein Pixel i2 der Kontrast AK2 zum Referenzbild oberhalb der Fehlerschwelle F2 liegt, wird dieser Bildbereich als Fehler bewertet. Die Unterscheidung zwischen einem Fehler und einer Warnung erfolgt also über den Kontrast AK2 der Abweichung im Bezug zur gelernten Referenz.

Zusätzlich kann eine weitere Auswertung über die Anzahl der Warnungen oder Fehler von Pixeln i2 in einer lokalen Nachbarschaft erfolgen. Weicht z. B. nur ein einzelnes Pixel i2 von dem gelernten Referenzbild ab, so ist dies eine Warnung oder ein Fehler geringer Größe und kann unter Umständen vernachlässigt werden. Aus diesem Grunde wird eine Betrachtung der Größe der Warnung oder des Fehlers nachgeschaltet, wobei in dieser Betrachtung überprüft wird, ob in einem z. B. 8x8 großen Pixelfeld in lokaler Nähe mehrere Pixel i2 aus der Referenz heraustreten und eine flächenmäßig größere Abweichung ergeben. Somit kann nicht nur der Kontrast AK2 als solcher, sondern auch die Fläche, in der im Kontrast AK2 eine Abweichung von dem gelernten Referenzbild besteht, ermittelt und diese Fläche bezüglich seiner Entscheidungsschwellen W2 und F2 eingestellt werden. Über einstellbare Entscheidungsschwellen W2 und F2 kann diejenige Anzahl von Abweichungen im Auswertebereich angegeben werden, ab der entweder eine Warnung oder ein Fehler angezeigt werden.

Damit bei dieser Betrachtung nicht Fehler mit hohem Kontrast AK2, aber geringer Größe übersehen werden, wird zudem die Fläche oberhalb der Fehlerschwelle F2 ermittelt. Wird dabei ein einstellbarer Wert, ein sogenanntes Fehlergewicht FG2, in einem lokalen Bereich von z. B. 8x8 Pixeln überschritten, wird unabhängig von der Fläche der Abweichung im Kontrast AK2 ein Fehler gemeldet.

Die Anzeige der Abweichungen erfolgt am Monitor 206 z. B. getrennt nach der Art der Abweichung vorzugsweise in unterschiedlichen Farben, wobei die Anzeige auf dem Monitor 206 vorzugsweise positionsgenau über das aktuelle Druckbild überblendet wird. Der Bediener wird dadurch in die Lage versetzt, bei einer laufenden Produktion der Druckmaschine sofort zu erkennen, in welchem Druckwerk die Ursache für eine Abweichung in der Qualität des Druckerzeugnisses auftritt. Die Ursache kann dann bewertet und behoben werden.

### Bezugszeichenliste

- 01: Gebilde, Beleuchtungsstreifen
- 02: Oberfläche
- 03: Material, Bogen, Materialbahn, Bedruckstoff, Wertpapier, Banknote
- 04: Bewegungsrichtung
- 05 ― 06: Beleuchtungseinrichtung
- 07: Lichtquelle, Leuchtdiode, Laserdiode
- 08: Erfassungseinrichtung, Bildaufnahmeeinheit, Kamera, Zeilenkamera, Farbzeilenkamera
- 09: Detektor, CCD-Array, Photodiode
- 10 ― 11: Spiegel, erster
- 12: Wirkfläche
- 13: Zentralstrahl
- 14: zentraler Bereich
- 15 ― 16: Spiegel, zweiter
- 17: Wirkfläche
- 18: Linse
- 19: Teilbereich
- 20 ― 21: Platine
- 22: Stromquelle, Konstantstromquelle
- 23: Steuereinrichtung
- 24: Bildverarbeitungseinrichtung
- 25 ― 26: Trennfuge
- 27: Träger
- 28: Kanal
- 29: Öffnung
- 30 ― 31: Öffnung
- 32: Montageseite
- 33: Peltierelement
- 34: Kühlkörper
- 35 ― 36: Temperatursensor
- 37: Lichtsensor
- 38: Schutz, Fußtritt
- 39: Druckwerkszylinder, Gegendruckzylinder
- 201: Farbzeilenkamera, Farbflächenkamera
- 202: Beleuchtungseinrichtung
- 203: Druckbild
- 204: Bildverarbeitungssystem
- 205 ― 206: Monitor
- 207: Tastatur
- A07: Abstand
- A09: Abstand
- A18: Abstand
- B01: Breite
- B03: Breite
- B06: Länge
- L01: Länge
- Z18: Zentrum

- AH1: Hüllfläche, erste
- AH2: Hüllfläche, zweite
- AK: Fläche, Kugeloberfläche

- M61: Modul
- M62: Modul
- M63: Modul
- M64: Modul
- M65: Modul

- t1: Belichtungsdauer
- t2: Auszeit
- t3: Einschaltdauer
- t4: Verzögerungszeit
- t5: Einschaltdauer

- α: Erfassungswinkel
- γ: Winkel
- ω: Raumwinkel

- Axy2: Amplitudenwert
- Aimax2: Maximalwert
- Aimin2: Minimalwert
- Aip2: Amplitudenwert
- AK2: Kontrast
- F2: Fehlerschwelle
- FG2: Fehlergewicht
- i2: Pixel
- W2: Warnschwelle

## Patentansprüche

1. Druckmaschine mit einem Inline-Inspektionssystem mit einer in einem Abstand (A07) von einem Bedruckstoff angeordneten Beleuchtungseinrichtung (06) mit mindestens einer Lichtquelle (07), wobei für die Lichtquelle (07) der Beleuchtungseinrichtung (06) eine Steuereinrichtung (23) vorgesehen ist, wobei ein Lichtsensor (37) mit der Steuereinrichtung (23) verbunden ist, wobei der Lichtsensor (37) die abgestrahlte Lichtmenge der mindestens einen Lichtquelle (07) der Beleuchtungseinrichtung (06) misst **dadurch gekennzeichnet, dass** die mindestens eine Lichtquelle (07) der Beleuchtungseinrichtung durch ein flüssiges oder eine gasförmiges kühlmedium gekühlt ist, wobei die Steuereinrichtung (23) derart ausgebildet ist, dass sie anhand des Messsignals des Lichtsensors (37) eine Einschaltdauer (t3) der mindestens einen Lichtquelle (07) anpasst.

2. Druckmaschine nach Anspruch 1, **dadurch gekennzeichnet, dass** die Lichtquelle (07) der Beleuchtungseinrichtung (06) als eine Anordnung von Leuchtdioden (07) oder Laserdioden (07) ausgebildet ist.

3. Druckmaschine nach Anspruch 1, **dadurch gekennzeichnet, dass** die Lichtquelle (07) der Beleuchtungseinrichtung (06) auf einem Träger (27) aus einem wärmeleitfähigen Werkstoff angeordnet ist.

4. Druckmaschine nach Anspruch 3, **dadurch gekennzeichnet, dass** der Träger (27) in seinem Inneren in Wärmekopplung zu der Lichtquelle (07) mindestens einen Kanal (28) aufweist, wobei das Kühlmedium den mindestens einen Kanal (28) durchströmt.

5. Druckmaschine nach Anspruch 1, **dadurch gekennzeichnet, dass** das Kühlmedium Wasser oder Luft ist.

6. Druckmaschine nach Anspruch 4, **dadurch gekennzeichnet, dass** das Kühlmedium den Träger (27) in zwei einander entgegengesetzten Richtungen durchströmt.

7. Druckmaschine nach Anspruch 1, **dadurch gekennzeichnet, dass** eine Regeleinrichtung vorgesehen ist, wobei die Regeleinrichtung die Temperatur des Kühlmediums überwacht.

8. Druckmaschine nach Anspruch 7, **dadurch gekennzeichnet, dass** die Regeleinrichtung eine Überschreitung einer für die Lichtquelle (07) maximal zulässigen Temperatur durch einen Regelungseingriff verhindert.

9. Druckmaschine nach Anspruch 3, **dadurch gekennzeichnet, dass** auf dem Träger (27) in Wärmekopplung zu der Lichtquelle (07) mindestens ein Peltierelement (33) angeordnet ist.

10. Druckmaschine nach Anspruch 9, **dadurch gekennzeichnet, dass** an dem Träger (27) ein Temperatursensor (36) zur Temperaturmessung angebracht ist.

11. Druckmaschine nach Anspruch 10, **dadurch gekennzeichnet, dass** eine elektronische Regeleinrichtung das mindestens eine Peltierelement (33) aufgrund der mit dem Temperatursensor (36) vorgenommenen Temperaturmessung regelt.

12. Druckmaschine nach Anspruch 9, **dadurch gekennzeichnet, dass** das mindestens eine Peltierelement (33) mit einem Kühlkörper (34) verbunden ist.

13. Druckmaschine nach Anspruch 1, **dadurch gekennzeichnet, dass** das Inline-Inspektionssystem eine Bildaufnahmeeinheit (08; 201) aufweist.

14. Druckmaschine nach Anspruch 13, **dadurch gekennzeichnet, dass** die Bildaufnahmeeinheit (08; 201) in einem Abstand (A09) von der Oberfläche des durch die Druckmaschine transportierten Bedruckstoffes im Bereich zwischen 10 mm und 1.000 mm angeordnet ist.

15. Druckmaschine nach Anspruch 14, **dadurch gekennzeichnet, dass** die Bildaufnahmeeinheit (08; 201) in einem Abstand (A09) von der Oberfläche des durch die Druckmaschine transportierten Bedruckstoffes im Bereich zwischen 50 mm und 400 mm angeordnet ist.

16. Druckmaschine nach Anspruch 13, **dadurch gekennzeichnet, dass** die Bildaufnahmeeinheit (08; 201) eine Zeilenkamera (08) aufweist.

17. Druckmaschine nach Anspruch 16, **dadurch gekennzeichnet, dass** eine von der Steuereinrichtung (23) gesteuerte Einschaltdauer (t3) der Lichtquelle (07) mit einer Belichtungsdauer (t1) der Zeilenkamera (08) synchronisiert ist.

18. Druckmaschine nach Anspruch 1, **dadurch gekennzeichnet, dass** die Lichtquelle (07) der Beleuchtungseinrichtung (06) an eine von der Steuereinrichtung (23) gesteuerte Konstantstromquelle (22) angeschlossen ist.

19. Druckmaschine nach Anspruch 1, **dadurch gekennzeichnet, dass** der Abstand (A07) der Beleuchtungseinrichtung (06) von einer Oberfläche des durch die Druckmaschine transportierten Bedruckstoffes zwischen 30 mm und 200 mm beträgt.

20. Druckmaschine nach Anspruch 1, **dadurch gekennzeichnet, dass** der Abstand (A07) der Beleuchtungseinrichtung (06) von einer Oberfläche des durch die Druckmaschine transportierten Bedruckstoffes zwischen 80 mm und 140 mm beträgt.

21. Druckmaschine nach Anspruch 1, **dadurch gekennzeichnet, dass** die Beleuchtungseinrichtung (06) aus mehreren zeilenförmig aneinander gereihten Modulen (M61 bis M65) besteht, wobei jeder Modul (M61 bis M65) mindestens eine Lichtquelle (07) aufweist.

22. Druckmaschine nach Anspruch 21 **dadurch gekennzeichnet, dass** die mindestens eine Lichtquelle (07) mindestens eines Moduls (M61 bis M65) unabhängig von der mindestens einen Lichtquelle (07) mindestens eines anderen Moduls (M61 bis M65) aktivierbar ist.

23. Druckmaschine nach Anspruch 21, **dadurch gekennzeichnet, dass** sich die Lichtquellen (07) der Beleuchtungseinrichtung (06) in der Lichtfarbe des von ihnen abgestrahlten Lichtes unterscheiden.

24. Druckmaschine nach Anspruch 1, **dadurch gekennzeichnet, dass** die Lichtquelle (07) der Beleuchtungseinrichtung (06) auf der Oberfläche des durch die Druckmaschine transportierten Bedruckstoffes einen Beleuchtungsstreifen (01) mit einer quer zur Transportrichtung des Bedruckstoffes gerichteten Länge (L01) und einer längs zur Transportrichtung des Bedruckstoffes gerichteten Breite (B01) erzeugt.

25. Druckmaschine nach Anspruch 21, **dadurch gekennzeichnet, dass** die zeilenförmige Aneinanderreihung der Module (M61 bis M65) an die Breite (B03) des zu beleuchtenden Bedruckstoffes adaptierbar ist.

26. Druckmaschine nach Anspruch 21, **dadurch gekennzeichnet, dass** die zeilenförmige Aneinanderreihung von Modulen (M61 bis M65) mit aktivierten Lichtquellen (07) mindestens so lang ist wie die Länge (L01) des Beleuchtungsstreifens (01).

27. Druckmaschine nach Anspruch 24, **dadurch gekennzeichnet, dass** sich der Beleuchtungsstreifen (01) auf der Oberfläche des durch die Druckmaschine transportierten Bedruckstoffes nicht in einem Fokus eines von der Lichtquelle (07) der Beleuchtungseinrichtung (06) ausgehenden Strahlengangs befindet.

28. Druckmaschine nach Anspruch 1, **dadurch gekennzeichnet, dass** die Lichtquelle (07) der Beleuchtungseinrichtung (06) die Oberfläche des durch die Druckmaschine transportierten Bedruckstoffes ohne einen Schattenwurf beleuchtet.

29. Druckmaschine nach Anspruch 1, **dadurch gekennzeichnet, dass** das Inline-Inspektionssystem ein Farbwerk der Druckmaschine steuert oder regelt.

30. Druckmaschine nach Anspruch 29, **dadurch gekennzeichnet, dass** eine vom Farbwerk bereitgestellte Farbmenge in quer zur Transportrichtung des Bedruckstoffes gerichteten, aneinander gereihten Zonen nach einer Vorgabe durch das Inline-Inspektionssystem einstellbar ist.

31. Druckmaschine nach Anspruch 1, **dadurch gekennzeichnet, dass** die Lichtquelle (07) innerhalb eines zumindest einen Teil des Druckwerks der Druckmaschine umgebenden Schutzes (38) angeordnet ist.

32. Druckmaschine nach Anspruch 1, **dadurch gekennzeichnet, dass** die Lichtquelle (07) unterhalb eines Fußtrittes (38) des Druckwerks der Druckmaschine angeordnet ist.

33. Druckmaschine nach Anspruch 13, **dadurch gekennzeichnet, dass** die Bildaufnahmeeinheit (08; 201) außerhalb eines Druckwerkes angeordnet ist.

34. Druckmaschine nach Anspruch 1, **dadurch gekennzeichnet, dass** die Bildaufnahmeeinheit (08; 201) den Bedruckstoff durch einen Schlitz des Schutzes (38) oder durch einen Schlitz des Fußtrittes (38) inspiziert.

35. Druckmaschine nach Anspruch 1, **dadurch gekennzeichnet, dass** das zur Kühlung der Lichtquellen (07) der Beleuchtungseinrichtung (06) verwendete Kühlmedium aus einem Kreislauf eines Kühlmediums zur Kühlung einer Kühlwalze eines zur Druckmaschine gehörenden Kühlwalzenständers und/oder aus einem Kreislauf eines Kühlmediums zur Kühlung einer Farbtemperierwalze eines zur Druckmaschine gehörenden Farbwerks und/oder aus einem Kreislauf eines Kühlmediums zur Kühlung einer Feuchtwerkswalze eines zur Druckmaschine gehörenden Feuchtwerks entnommen ist.

36. Druckmaschine nach Anspruch 1, **dadurch gekennzeichnet, dass** in der Beleuchtungseinrichtung (06) nebeneinander mehrere Lichtquellen (07) angeordnet sind.

37. Druckmaschine nach Anspruch 36 **dadurch gekennzeichnet, dass** eine zentrale Ebene des von den nebeneinander angeordneten Lichtquellen (07) der Beleuchtungseinrichtung (06) emittierten Lichtes und eine zentrale Ebene des vom Beleuchtungsstreifen (01) zur Bildaufnahmeeinheit (08; 201) remittierten Lichtes einen spitzen Winkel (γ) miteinander einschließen.

38. Druckmaschine nach Anspruch 37 **dadurch gekennzeichnet, dass** der Winkel (γ) im Bereich zwischen 15° und 60° liegt.

39. Druckmaschine nach Anspruch 1, **dadurch gekennzeichnet, dass** die Lichtquelle (07) der Beleuchtungseinrichtung (06) den Beleuchtungsstreifen (01) auf einem von einem Druckswerkszylinder (39) transportierten Bedruckstoff ausbildet.

40. Druckmaschine nach Anspruch 39, **dadurch gekennzeichnet, dass** der Druckswerkszylinder (39) als ein Gegendruckzylinder (39) ausgebildet ist.

41. Druckmaschine nach Anspruch 1, **dadurch gekennzeichnet, dass** die Druckmaschine als eine Widerdruckmaschine ausgebildet ist.

42. Druckmaschine nach Anspruch 1, **dadurch gekennzeichnet, dass** mindestens zwei verschiedenen produzierenden Druckwerkszylindern (39) dieser Druckmaschine jeweils eine Bildaufnahmeeinheit (08; 201) zugeordnet sind.

43. Druckmaschine nach Anspruch 1, **dadurch gekennzeichnet, dass** mindestens eine Bildaufnahmeeinheit (08; 201) vor einer Wendeeinrichtung für einen in der Druckmaschine zu bedruckenden Bogen und eine weitere Bildaufnahmeeinheit (08; 201) nach dieser Wendeeinrichtung angeordnet sind.

44. Druckmaschine nach Anspruch 42 oder 43 **dadurch gekennzeichnet, dass** mindestens eine Bildaufnahmeeinheit (08; 201) hinter dem letzten Druckwerk der Druckmaschine angeordnet ist.

45. Druckmaschine nach Anspruch 42 oder 43, **dadurch gekennzeichnet, dass** dasselbe Bildverarbeitungssystem Signale der verschiedenen Bildaufnahmeeinheiten (08; 201) in einem Duplexmodus weiterverarbeitet und auswertet.

46. Druckmaschine nach Anspruch 1, **dadurch gekennzeichnet, dass** das Inline-Inspektionssystem ein Seiten- und/oder Umfangsregister der Druckmaschine steuert oder regelt.

## Claims

1. A printing press with an in-line inspection system with an illumination device (06) arranged at a distance (A07) from a material to be printed and having at least one light source (07), wherein a control device (23) is provided for the light source (07) of the illumination device (06), wherein a light sensor (37) is connected to the control device (23), wherein the light sensor (37) measures the radiated quantity of light of the at least one light source (07) of the illumination device (06), **characterized in that** the at least one light source (07) of the illumination device is cooled by a liquid or a gaseous cooling medium, wherein the control device (23) is designed in such a way that it adapts a switch-on duration (t3) of the at least one light source (07) with reference to the measurement signal of the light sensor (37).

2. A printing press according to Claim 1, **characterized in that** the light source (07) of the illumination device (06) is constructed in the form of an arrangement of luminous diodes (07) or laser diodes (07).

3. A printing press according to Claim 1, **characterized in that** the light source (07) of the illumination device (06) is arranged on a support (27) of a heat-conducting material.

4. A printing press according to Claim 3, **characterized in that** the support (27) has at least one duct (28) in its interior in a manner thermally coupled to the light source (07), wherein the cooling medium flows through the at least one duct (28).

5. A printing press according to Claim 1, **characterized in that** the cooling medium is water or air.

6. A printing press according to Claim 4, **characterized in that** the cooling medium flows through the support (27) in two directions opposed to each other.

7. A printing press according to Claim 1, **characterized in that** a regulating device is provided, wherein the regulating device monitors the temperature of the cooling medium.

8. A printing press according to Claim 7, **characterized in that** the regulating device prevents - by a regulating intervention - a maximum permissible temperature for the light source (07) from being exceeded.

9. A printing press according to Claim 3, **characterized in that** at least one Peltier element (33) is arranged on the support (27) in a manner thermally coupled to the light source (07).

10. A printing press according to Claim 9, **characterized in that** a temperature sensor (36) for measuring the temperature is attached to the support (27).

11. A printing press according to Claim 10, **characterized in that** an electronic regulating device regulates the at least one Peltier element (33) on the basis of the temperature measurement carried out by the temperature sensor (36).

12. A printing press according to Claim 9, **characterized in that** the at least one Peltier element (33) is connected to a heat sink (34).

13. A printing press according to Claim 1, **characterized in that** the in-line inspection system has an image-recording unit (08; 201).

14. A printing press according to Claim 13, **characterized in that** the image-recording unit (08; 201) is arranged at a distance (A09), in the range of between 10 mm and 1,000 mm, from the surface of the material to be printed conveyed through the printing press.

15. A printing press according to Claim 14, **characterized in that** the image-recording unit (08; 201) is arranged at a distance (A09), in the range of between 50 mm and 400 mm, from the surface of the material to be printed conveyed through the printing press.

16. A printing press according to Claim 13, **characterized in that** the image-recording unit (08; 201) is a line camera.

17. A printing press according to Claim 16, **characterized in that** a switch-on duration (t3) of the light source (07) controlled by the control device (23) is synchronized with an illumination duration (t1) of the line camera (08).

18. A printing press according to Claim 1, **characterized in that** the light source (07) of the illumination device (06) is connected to a constant-voltage source (22) controlled by the control device (23).

19. A printing press according to Claim 1, **characterized in that** the distance (A07) of the illumination device (06) from a surface of the material to be printed conveyed through the printing press amounts to between 30 mm and 200 mm.

20. A printing press according to Claim 1, **characterized in that** the distance (A07) of the illumination device (06) from a surface of the material to be printed conveyed through the printing press amounts to between 80 mm and 140 mm.

21. A printing press according to Claim 1, **characterized in that** the illumination device (06) consists of a plurality of modules (M61 to M65) arranged in a row adjacent to one another in the form of a line, wherein each module (M61 to M65) has at least one light source (07).

22. A printing press according to Claim 21, **characterized in that** the at least one light source (07) of at least one module (M61 to M65) is capable of being activated independently of the at least one light source (07) of at least one other module (M61 to M65).

23. A printing press according to Claim 21, **characterized in that** the light sources (07) of the illumination device (06) differ in the light colour of the light radiated by them.

24. A printing press according to Claim 1, **characterized in that** the light source (07) of the illumination device (06) on the surface of the material to be printed conveyed through the printing press produces an illumination strip (01) with a length (L01) directed longitudinally with respect to the conveying direction of the material to be printed and a width (B01) directed longitudinally with respect to the conveying direction of the material to be printed.

25. A printing press according to Claim 21, **characterized in that** the arrangement of the modules (M61 to M65) in a row adjacent to one another in the form of a line is capable of being adapted to the width (B03) of the material to be printed which is to be illuminated.

26. A printing press according to Claim 21, **characterized in that** the arrangement of the modules (M61 to M65) in a row adjacent to one another in the form of a line with the light sources (07) activated is at least as long as the length (L01) of the illumination strip (01).

27. A printing press according to Claim 24, **characterized in that** the illumination strip (01) on the surface of the material to be printed conveyed through the printing press is not situated in a focus of the beam path starting from the light source (07) of the illumination device (06).

28. A printing press according to Claim 1, **characterized in that** the light source (07) of the illumination device (06) illuminates, without a cast shadow, the surface of the material to be printed conveyed through the printing press.

29. A printing press according to Claim 1, **characterized in that** the in-line inspection system controls or regulates an inking unit of the printing press.

30. A printing press according to Claim 29, **characterized in that** a quantity of ink prepared by the inking unit is capable of being set in zones which are directed transversely with respect to the conveying direction of the material to be printed and which are arranged in a row adjacent to one another, in accordance with a pre-setting by the in-line inspection system.

31. A printing press according to Claim 1, **characterized in that** the light source (07) is arranged inside a protection means (38) surrounding at least part of the printing couple of the printing press.

32. A printing press according to Claim 1, **characterized in that** the light source (07) is arranged below a pedal (38) of the printing couple of the printing press.

33. A printing press according to Claim 13, **characterized in that** the image-recording unit (08; 201) is arranged outside a printing couple.

34. A printing press according to Claim 1, **characterized in that** the image-recording unit (08; 201) inspects the material to be printed through a slot in the protection means (38) or through a slot in the pedal (38).

35. A printing press according to Claim 1, **characterized in that** the cooling medium used for cooling the light sources (07) of the illumination device (06) is taken from a circuit of a cooling medium for cooling a cooling roller of a cooling-roller stand associated with the printing press and/or from a circuit of a cooling medium for cooling an ink-tempering roller of an inking unit associated with the printing press and/or from a circuit of a cooling medium for cooling a dampening-unit roller of a dampening unit associated with the printing press.

36. A printing press according to Claim 1, **characterized in that** a plurality of light sources (07) are arranged adjacent to one another in the illumination device (06).

37. A printing press according to Claim 36, **characterized in that** a central plane of the light emitted by the light sources (07) of the illumination device (06) arranged adjacent to one another and a central plane of the light remitted by the illumination strip (01) to the image-recording unit (08; 201) form an acute angle (γ) with each other.

38. A printing press according to Claim 37, **characterized in that** the angle (γ) is in the range of between 15° and 60°.

39. A printing press according to Claim 1, **characterized in that** the light source (07) of the illumination device (06) forms the illumination strip (01) on a material to be printed conveyed by a printing-couple cylinder (39).

40. A printing press according to Claim 39, **characterized in that** the printing-couple cylinder (39) is constructed in the form of a counter-impression cylinder (39).

41. A printing press according to Claim 1, **characterized in that** the printing press is constructed in the form of a perfector press.

42. A printing press according to Claim 1, **characterized in that** one image-recording unit (08; 201) is associated in each case with at least two different producing printing-couple cylinders (39) of the said printing press.

43. A printing press according to Claim 1, **characterized in that** at least one image-recording unit (08; 201) is arranged upstream of a turner device for a sheet to be printed in the printing press, and a further image-recording unit (08; 201) is arranged downstream of the said turner device.

44. A printing press according to Claim 42 or 43, **characterized in that** at least one image-recording unit (08; 201) is arranged behind the last printing couple of the printing press.

45. A printing press according to Claim 42 or 43, **characterized in that** the same image-evaluating system further processes and evaluates signals of the various image-recording units (08; 201) in a duplex mode.

46. A printing press according to Claim 1, **characterized in that** the in-line inspection system controls or regulates a page register and/or periphery register of the printing press.

## Revendications

1. Machine à imprimer comprenant un système d'inspection en ligne, avec un dispositif d'éclairement (06) disposé à une distance (A07) d'un matériau imprimé, avec au moins une source de lumière (07), un dispositif de commande (23) étant prévu pour la source de lumière (07) du dispositif d'éclairement (06), un photo-capteur (37) étant relié au dispositif de commande (23), le photo-capteur (37) mesurant la quantité de lumière irradiée de la au moins une source de lumière (07) du dispositif d'éclairement (06), **caractérisée en ce que** la au moins une source de lumière (07) du dispositif d'éclairement est refroidie par un fluide de refroidissement liquide ou un fluide de refroidissement gazeux, le dispositif de commande (23) étant réalisé de manière qu'il adapte une durée de mise en service (t3) de la au moins une source de lumière (07), à l'aide du signal de mesure du photo-capteur (37).

2. Machine à imprimer selon la revendication 1, **caractérisée en ce que** la source de lumière (07) du dispositif d'éclairement (06) est réalisée sous la forme d'un agencement de diodes lumineuses (07) ou de diodes laser (07).

3. Machine à imprimer selon la revendication 1, **caractérisée en ce que** la source de lumière (07) du dispositif d'éclairement (06) est disposée sur un support (27) formé d'un matériau conducteur de la chaleur.

4. Machine à imprimer selon la revendication 3, **caractérisée en ce que** le support (27) présente intérieurement, en couplage thermique avec la source de lumière (07), au moins un canal (28), l'écoulement de fluide de refroidissement traversant le au moins un canal (28).

5. Machine à imprimer selon la revendication 1, **caractérisée en ce que** le fluide de refroidissement est de l'eau ou de l'air.

6. Machine à imprimer selon la revendication 4, **caractérisée en ce que** l'écoulement du fluide de refroidissement traverse le support (27) en deux sens opposés l'un à l'autre.

7. Machine à imprimer selon la revendication 1, **caractérisée en ce qu'**est prévu un dispositif de régulation, le dispositif de régulation surveillant la température du fluide de refroidissement.

8. Machine à imprimer selon la revendication 7, **caractérisée en ce que** le dispositif de régulation, par une intervention en régulation, empêche tout dépassement d'une température maximale admissible pour la source de lumière (07).

9. Machine à imprimer selon la revendication 3, **caractérisée en ce qu'**au moins un élément à effet Peltier (33) est disposé sur le support (27), en couplage thermique avec la source de lumière (07).

10. Machine à imprimer selon la revendication 9, **caractérisée en ce que** sur le support (27) est monté un capteur de température (36) servant à la mesure de température.

11. Machine à imprimer selon la revendication 10, **caractérisée en ce qu'**un dispositif de régulation électronique règle le au moins un élément à effet Peltier (33), du fait de la mesure de température effectuée à l'aide du capteur de température (36).

12. Machine à imprimer selon la revendication 9, **caractérisée en ce que** le au moins un élément à effet Peltier (33) est relié à un corps de refroidissement (34).

13. Machine à imprimer selon la revendication 1, **caractérisée en ce que** le système d'inspection en ligne présente une unité d'enregistrement d'images (08 ; 201).

14. Machine à imprimer selon la revendication 13, **caractérisée en ce que** l'unité d'enregistrement d'images (08 ; 201) est disposée à une distance (A09), comprise dans la fourchette entre 10 mm et 1.000 mm, vis-à-vis de la surface du matériau à imprimer transporté à travers la machine à imprimer.

15. Machine à imprimer selon la revendication 14, **caractérisée en ce que** l'unité d'enregistrement d'images (08 ; 201) est disposée à une distance (A09), comprise dans la fourchette entre 50 mm et 400 mm, vis-à-vis de la surface du matériau à imprimer transporté à travers la machine à imprimer.

16. Machine à imprimer selon la revendication 13, **caractérisée en ce que** l'unité d'enregistrement d'images (08 ; 201) présente une caméra à lignes (08).

17. Machine à imprimer selon la revendication 16, **caractérisée en ce qu'**une durée de mise en service (t3), de la source de lumière (07) commandée par le dispositif de commande (23), est synchronisée avec une durée d'éclairement (t1) de la caméra à lignes (08).

18. Machine à imprimer selon la revendication 1, **caractérisée en ce que** la source de lumière (07) du dispositif d'éclairement (06) est raccordée à une source de courant constant (22) commandée par le dispositif de commande (23).

19. Machine à imprimer selon la revendication 1, **caractérisée en ce que** l'espacement (A07) du dispositif d'éclairement (06) est compris dans la fourchette entre 30 mm et 200 mm, vis-à-vis de la surface du matériau à imprimer transporté à travers la machine à imprimer.

20. Machine à imprimer selon la revendication 1, **caractérisée en ce que** l'espacement (A07) du dispositif d'éclairement (06) est compris dans une fourchette entre 80 mm et 140 mm, vis-à-vis d'une surface du matériau à imprimer transporté à travers la machine à imprimer.

21. Machine à imprimer selon la revendication 1, **caractérisée en ce que** le dispositif d'éclairement (06) est composé d'une pluralité de modules (M61 à M65) alignés en rangées les uns les autres en forme de lignes, chaque module (M61 à M65) présentant au moins une source de lumière (07).

22. Machine à imprimer selon la revendication 21, **caractérisée en ce que** la au moins une source de lumière (07) d'au moins un module (M61 à M65) est susceptible d'être activée, indépendamment de la au moins une source de lumière (07) d'au moins un autre module (M61 à M65).

23. Machine à imprimer selon la revendication 21, **caractérisée en ce que** les sources de lumière (07) du dispositif d'éclairement (06) se distinguent au niveau de la couleur de la lumière irradiée par elles.

24. Machine à imprimer selon la revendication 1, **caractérisée en ce que** la source de lumière (07) du dispositif d'éclairement (06), sur la surface du matériau à imprimé transporté à travers la machine à imprimer, produit une bande d'éclairement (01) d'une longueur (L01), orientée transversalement par rapport à la direction de transport du matériau à imprimer, et d'une largeur (B01), orientée dans la direction longitudinale de transport du matériau à imprimer.

25. Machine à imprimer selon la revendication 21, **caractérisée en ce que** l'alignement en rangées les uns les autres en forme de lignes des modules (M61 à M65) est susceptible d'être adapté à la largeur (B03) du matériau à imprimer devant être éclairé.

26. Machine à imprimer selon la revendication 21, **caractérisée en ce que** l'alignement en rangées les uns les autres, en forme de lignes, des modules (M61 à M65) avec des sources de lumière (07) activées, est au moins aussi long que la longueur (L01) de la bande d'éclairement (01).

27. Machine à imprimer selon la revendication 24, **caractérisée en ce que**, sur la surface du matériau à imprimer transporté à travers la machine à imprimer, la bande d'éclairement (01) ne se trouve pas en un foyer d'un trajet des rayons partant de la source de lumière (07) du dispositif d'éclairement (06).

28. Machine à imprimer selon la revendication 1, **caractérisée en ce que** la source de lumière (07) du dispositif d'éclairement (06) éclaire la surface du matériau à imprimer transporté à travers la machine à imprimer, sans qu'il y ait de projection d'ombre.

29. Machine à imprimer selon la revendication 1, **caractérisée en ce que** le système d'inspection en ligne commande ou règle un groupe d'encrage de la machine à imprimer.

30. Machine à imprimer selon la revendication 29, **caractérisée en ce qu'**une quantité d'encre fournie par le groupe d'encrage dans des zones alignées en rangées les unes les autres orientées transversalement par rapport à la direction de transport du matériau à imprimer est réglable, selon une affectation faite par le système d'inspection en ligne.

31. Machine à imprimer selon la revendication 1, **caractérisée en ce que** la source de lumière (07) est disposée à l'intérieur d'une protection (38) entourant au moins une partie du groupe d'impression de la machine à imprimer.

32. Machine à imprimer selon la revendication 1, **caractérisée en ce que** la source de lumière (07) est disposée au-dessous d'un plancher (38) du groupe d'impression de la machine à imprimer.

33. Machine à imprimer selon la revendication 13, **caractérisée en ce que** l'unité d'enregistrement d'images (08 ; 201) est disposée à l'extérieur d'un groupe d'impression.

34. Machine à imprimer selon la revendication 1, **caractérisée en ce que** l'unité d'enregistrement d'images (08 ; 201) inspecte le matériau à imprimer à travers une fente de la protection (38), ou à travers une fente du plancher (38).

35. Machine à imprimer selon la revendication 1, **caractérisée en ce que** le fluide de refroidissement, utilisé pour refroidir les sources de lumière (07) du dispositif d'éclairement (06), est prélevé d'un circuit d'un fluide de refroidissement pour le refroidissement d'un rouleau de refroidissement d'une cage à rouleaux de refroidissement appartenant à la machine à imprimer et/ou est prélevé d'un circuit d'un fluide de refroidissement pour refroidir un rouleau de régulation de température d'encre d'un groupe d'encrage appartenant à la machine à imprimer et/ou est prélevé d'un circuit d'un fluide de refroidissement pour refroidir un rouleau de groupe d'humidification d'un groupe d'humidification appartenant à la machine à imprimer.

36. Machine à imprimer selon la revendication 1, **caractérisée en ce que** plusieurs sources de lumière (07) sont disposées les unes à côté des autres dans le dispositif d'éclairement (06).

37. Machine à imprimer selon la revendication 36, **caractérisée en ce qu'**un plan central de la lumière émise par les sources de lumière (07) disposées les unes à côté des autres du dispositif d'éclairement (06) et un plan central de la lumière réémise par la bande d'éclairement (01) vers l'unité d'enregistrement d'images (08 ; 201) font entre eux un angle (γ) aigu.

38. Machine à imprimer selon la revendication 37, **caractérisée en ce que** l'angle (γ) est situé dans une fourchette comprise entre 15° et 60°.

39. Machine à imprimer selon la revendication 1, **caractérisée en ce que** la source de lumière (07) du dispositif d'éclairement (06) réalise la bande d'éclairement (01) sur un matériau à imprimer transporté par un cylindre de groupe d'impression (39).

40. Machine à imprimer selon la revendication 39, **caractérisée en ce que** le cylindre de groupe d'impression (39) est réalisé sous la forme de cylindre de contre-pression (39).

41. Machine à imprimer selon la revendication 1, **caractérisée en ce que** la machine à imprimer est réalisée sous la forme de machine d'impression verso.

42. Machine à imprimer selon la revendication 1, **caractérisée en ce qu'**à au moins deux cylindres de groupe d'impression (39), ayant une production différente de cette machine à imprimer, sont chaque fois associés une unité d'enregistrement d'images (08 ; 201).

43. Machine à imprimer selon la revendication 1, **caractérisée en ce qu'**au moins une unité d'enregistrement d'images (08 ; 201) est disposée en amont d'un dispositif de retournement pour une feuille à imprimer dans la machine à imprimer, et une autre unité d'enregistrement d'images (08 ; 201) est disposée en aval de ce dispositif de retournement.

44. Machine à imprimer selon la revendication 42 ou 43, **caractérisée en ce qu'**au moins l'unité d'enregistrement d'images (08 ; 201) est disposée derrière le dernier groupe d'impression de la machine à imprimer.

45. Machine à imprimer selon la revendication 42 ou 43, **caractérisée en ce que** le même système de traitement d'image retraite et évalue, en un mode duplex, des signaux venant des différentes unités d'enregistrement d'images (08 ; 201).

46. Machine à imprimer selon la revendication 1, **caractérisée en ce que** le système d'inspection en ligne commande ou règle un repérage latéral et/ou périphérique de la machine à imprimer.
